(19) **Europäisches Patentamt / European Patent Office / Office européen des brevets**

(11) **EP 3 346 626 B1**

(12) **EUROPEAN PATENT SPECIFICATION**

(45) Date of publication and mention
of the grant of the patent:
**15.04.2020   Bulletin 2020/16**

(51) Int Cl.:
*H04L 1/00* (2006.01)      *H04W 28/00* (2009.01)

(21) Application number: **17201591.9**

(22) Date of filing: **11.03.2014**

(54) **INFORMATION NOTIFICATION, INFORMATION REPORTING, AND DATA RECEIVING METHODS AND DEVICES**

INFORMATIONSBENACHRICHTIGUNG, INFORMATIONSMELDUNG UND DATENEMPFANGSVERFAHREN UND -VORRICHTUNGEN

NOTIFICATION D'INFORMATIONS, RAPPORT D'INFORMATIONS ET PROCÉDÉS ET DISPOSITIFS DE RÉCEPTION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2013   PCT/CN2013/086382**

(43) Date of publication of application:
**11.07.2018   Bulletin 2018/28**

(62) Document number(s) of the earlier application(s) in accordance with Art. 76 EPC:
**14858066.5 / 3 054 613**

(73) Proprietor: **HUAWEI TECHNOLOGIES CO., LTD. Guangdong 518129 (CN)**

(72) Inventors:
• **Xia, Liang**
  **Shenzhen, Guangdong 518129 (CN)**
• **Xia, Yuan**
  **Shenzhen, Guangdong 518129 (CN)**

(74) Representative: **Epping - Hermann - Fischer Patentanwaltsgesellschaft mbH Schloßschmidstraße 5 80639 München (DE)**

(56) References cited:
**EP-A1- 2 228 933          GB-A- 2 500 254
US-A1- 2007 259 671**

• **"Further Evaluation and Discussion on 256QAM", 3GPP DRAFT; R1-134764 FURTHER EVALUATION AND DISCUSSION ON HIGHER ORDER MODULATION, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG1, no. Guangzhou, China; 20131007 - 20131011 28 September 2013 (2013-09-28), XP050717814, Retrieved from the Internet: URL:http://www.3gpp.org/ftp/tsg_ran/WG1_RL 1/TSGR1_74b/Docs/ [retrieved on 2013-09-28]**
• **CATT: "Corrections on CQI definition", 3GPP DRAFT; R1-130119, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St. Julian; 20130128 - 20130201 18 January 2013 (2013-01-18), XP050663324, Retrieved from the Internet: URL:http://www.3gpp.org/ftp/tsg_ran/WG1_RL 1/TSGR1_72/Docs/ [retrieved on 2013-01-18]**

**Description**

**TECHNICAL FIELD**

The present invention relates to the field of communications technologies, and in particular, to information notification, information reporting, and data receiving methods and devices.

**BACKGROUND**

Currently, a self-adaptation procedure of a physical downlink shared channel (Physical Downlink Shared Channel, PDSCH) in a Long Term Evolution (Long Term Evolution, LTE) system is as follows: A user equipment (User Equipment, UE) estimates channel information that is used to measure channel state information (Channel State Information, CSI); the UE calculates an optimal rank indication (Rank Indication, RI) and an optimal precoding matrix indication (Precoding Matrix Indication, PMI) according to the channel information obtained by estimation; the UE calculates, according to the channel information obtained by estimation, a signal to interference plus noise ratio (Signal to Interference plus Noise Ratio, SINR) that is based on the optimal RI and the optimal PMI; the UE quantizes the SINR obtained by calculation into a 4-bit channel quality indicator (Channel Quality Indicator, CQI); the UE reports values of the PMI, the RI, and the CQI to an evolved NodeB (evolution NodeB, eNB); the eNB determines, according to the RI and the PMI reported by the UE, a flow quantity and a precoding matrix of a PDSCH transmitted to the UE, and the eNB allocates a modulation and coding scheme (Modulation and Coding Scheme, MCS) to the UE according to the CQI value reported by the UE and a network situation, where the MCS is used to indicate a modulation and coding scheme currently used by the PDSCH; and the UE receives PDSCH data according to the MCS. During the foregoing process of quantizing the SINR into the CQI, a main interval of the SINR is (-7 dB, 19.488 dB), and an SINR not within this interval is processed in a saturated manner.

In a hotspot scenario such as a relay (Relay) or LTE hotspot improvements (LTE Hotspot Improvements, LTE-Hi) scenario, all SINR values acquired by the UE are relatively large. For example, under a particular condition, SINR values of almost 50% of UEs exceed 20 dB. However, because during a process of quantizing an SINR into a CQI, an SINR value greater than a maximum value of the foregoing main interval is processed in the saturated manner, and an index of a CQI corresponding to the processing in the saturated manner is 15, the UE can select only a modulation and coding scheme corresponding to the CQI whose index is 15, which prevents the UE from selecting a modulation and coding scheme of a higher modulation order and further affects system performance.

After 256 quadrature amplitude modulation (Quadrature Amplitude Modulation, QAM) is introduced, the foregoing problem can be resolved, that is, system performance in a case in which an SINR is relatively high can be improved. However, after 256QAM is introduced, tables used to indicate a CQI and indicate an MCS are also expanded generally, to support the case in which the SINR is relatively high. For example, a CQI table changes from a 4-bit (bit) CQI table to a 5-bit CQI table, and an MCS table changes from a 5-bit MCS table to a 6-bit MCS table. This increases an overhead of a CQI feedback and increases an overhead of an MCS indication. Another method is deleting an entry corresponding to a low SINR without changing sizes of the CQI table and the MCS table, and this narrows down a range of SINRs supported by the CQI table and the MCS table. For example, the SINR is extremely high in a slightly interfered subframe, and the SINR is extremely low in a severely interfered subframe. For a same UE, a variation range of SINRs in different subframes is extremely wide, so that using the foregoing CQI table and MCS table cannot meet a variation range of SINRs in all subframes.

3GPP document R1-134764 is related to further evaluation and discussion on 256QAM. It discloses that the current 4-bit CQI table defines 15 CQIs, the end of which is based on 64QAM and coding rate 0.926. It is therefore considered necessary to expand the mapping range of the CQI table so that eNodeB can obtain accurate channel capacity information. There are two methods to extend the mapping range of the CQI table. It proposes that an additional 4-bit CQI table shall be defined to support 256QAM based transmission considering minimum standardization impact. The CQI table used for CQI generation shall be per CSI-process configured.

US 2007/0259671 A1 is related to the generation, deployment and use of tailored channel quality indicator tables. A mobile device forms a CQI message by accessing a CQI table associated with a cell of interest and identifying a range of CQI values that includes the channel quality estimate derived by the mobile device. The index value associated with the identified range of CQI values is mapped to a corresponding series of bits and transmitted to the corresponding base station. The CQI tables accessed by the mobile devices are tailored to particular cells of interest. Since channel conditions vary from cell to cell, a more accurate channel quality feedback mechanism results by using CQI tables tailored to the channel conditions of individual cells as compared to using a standardized table. The use of tailored CQI tables permits the base stations to more reliably and accurately allocate radio resources within particular cells.

EP 2 228 933 A1 discloses a radio transmitting device and radio transmitting method. Based on a CQI received as input, table selection MCS determination section determines for the control channel with reference to the CQI table corresponding to the bandwidth among the control channel CQI tables. For example, table 1 is the CQI table for a 500 kHz bandwidth or below, and table 2 is the CQI table for more than a 500 kHz bandwidth. Further, with the same CQIs, SE in table 1 is set up lower than SE in table 2. When the bandwidth is narrow as 500 kHz, that is, when frequency diversity effect is small, lower SE is selected. On the other hand, when frequency diversity effect is significant, higher SE is selected than the SE in table 1. Accordingly, when the frequency diversity effect is significant, few control signal resources make it possible to satisfy the required quality for the control channel compared in a case where diversity effect is small, so that it is possible to increase the amount of resources used for the data channel.

## SUMMARY

The present invention provides information notification, information reporting, and data receiving methods and devices, so that a UE performs more precise CQI measurement on a specific measurement resource, or a UE receives data more efficiently on a specific transmission resource. The invention is defined by an information notification method, an information reporting method and corresponding apparatuses as well as a computer program product as defined by independent claims 1, 5 and 9-11. Further embodiments are defined by the dependent claims. Embodiments defined herein and not covered by the claims serve as examples for understanding the invention.

According to a first aspect, an embodiment of the present invention provides an information notification method, including:

determining at least two resource groups and channel state information CSI configuration information corresponding to each of the resource groups, where the at least two resource groups and the CSI configuration information need to be notified to a user equipment UE, and the CSI configuration information is used to indicate a CSI candidate set; and
notifying the UE of the at least two resource groups and the CSI configuration information corresponding to each of the resource groups.

With reference to the first aspect, in a first possible implementation manner, the CSI includes channel quality indicator information CQI, and/or a precoding matrix indication PMI, and/or a rank indication RI.

With reference to the first aspect, or with reference to the first possible implementation manner of the first aspect, in a second possible implementation manner, the CSI candidate set includes a preset CSI table or a set consisting of a candidate entry in a preset CSI table.

With reference to the second possible implementation manner of the first aspect, in a third possible implementation manner, the CSI configuration information is bitmap signaling, and the set consisting of a candidate entry in the preset CSI table is represented by using the bitmap signaling.

With reference to the second possible implementation manner of the first aspect, or with reference to the third possible implementation manner of the first aspect, in a fourth possible implementation manner, the CSI table is a CQI table, a PMI table, or an RI table.

With reference to the first aspect, in a fifth possible implementation manner, each of the resource groups includes one of the following resources:

a subframe, a subframe set, a resource block, a resource block set, a carrier, a carrier set, a channel state information CSI process, a CSI process set, a channel state information-reference signal CSI-RS, a CSI-RS set, an access point, and an access point set. According to a second aspect, an embodiment of the present invention provides an information reporting method, including:
receiving at least two resource groups and CSI configuration information corresponding to each of the resource groups, where the at least two resource groups and the CSI configuration information are notified by a base station, and the CSI configuration information is used to indicate a CSI candidate set; and
determining the CSI candidate set according to the CSI configuration information that is notified by the base station and that is corresponding to each of the resource groups, performing CSI measurement on the resource group by using the CSI candidate set, and reporting CSI obtained by measurement to the base station.

With reference to the second aspect, in a first possible implementation manner, the CSI includes channel quality indicator information CQI, and/or a precoding matrix indication PMI, and/or a rank indication RI.

With reference to the second aspect, or with reference to the first possible implementation manner of the second aspect, in a second possible implementation manner, the CSI candidate set includes a preset CSI table or a set consisting of a candidate entry in a preset CSI table.

With reference to the second possible implementation manner of the second aspect, in a third possible implementation manner, the CSI configuration information is bitmap signaling, and the set consisting of a candidate entry in the preset CSI table is represented by using the bitmap signaling.

With reference to the second possible implementation manner of the second aspect, or with reference to the third possible implementation manner of the second aspect, in a fourth possible implementation manner, the CSI table is a CQI table, a PMI table, or an RI table.

With reference to the second aspect, in a fifth possible implementation manner, each of the resource groups includes one of the following resources:
a subframe, a subframe set, a resource block, a resource block set, a carrier, a carrier set, a CSI process, a CSI process set, a channel state information-reference signal CSI-RS, a CSI-RS set, an access point, and an access point set.

According to a third aspect, an embodiment of the present invention provides an information notification method, including:

determining CSI configuration information that needs to be notified to a user equipment UE and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set; and
notifying the UE of the CSI configuration information respectively corresponding to the case in which the CSI is reported based on the PUSCH reporting mode and the case in which the CSI is reported based on the PUCCH reporting mode.

With reference to the third aspect, in a first possible implementation manner, the method further includes: determining at least two resource groups that need to be notified to the user equipment UE, and notifying the UE of the at least two resource groups;

the determining CSI configuration information that needs to be notified to a UE and that is respectively corresponding to a case in which CSI is reported based on a PUSCH reporting mode and a case in which CSI is reported based on a PUCCH reporting mode includes: determining CSI configuration information that needs to be notified to the UE and that is corresponding to a case in which CSI of the at least two resource groups is reported based on the PUSCH reporting mode and CSI configuration information that needs to be notified to the UE and that is corresponding to a case in which CSI of the at least two resource groups is reported based on the PUCCH reporting mode; and
the notifying the UE of the CSI configuration information respectively corresponding to the case in which the CSI is reported based on the PUSCH reporting mode and the case in which the CSI is reported based on the PUCCH reporting mode includes: notifying the UE of the CSI configuration information corresponding to the case in which the CSI of the at least two resource groups is reported based on the PUSCH reporting mode and the CSI configuration information corresponding to the case in which the CSI of the at least two resource groups is reported based on the PUCCH reporting mode.

With reference to the third aspect, or with reference to the first possible implementation manner of the third aspect, in a second possible implementation manner, the CSI includes channel quality indicator information CQI, and/or a precoding matrix indication PMI, and/or a rank indication RI.

With reference to the third aspect, or with reference to the first possible implementation manner of the third aspect, or with reference to the second possible implementation manner of the third aspect, in a third possible implementation manner, the CSI candidate set includes a preset CSI table or a set consisting of a candidate entry in a preset CSI table.

With reference to the third possible implementation manner of the third aspect, in a fourth possible implementation manner, the CSI configuration information is bitmap signaling, and the set consisting of a candidate entry in the preset CSI table is represented by using the bitmap signaling.

With reference to the third possible implementation manner of the third aspect, or with reference to the fourth possible implementation manner of the third aspect, in a fifth possible implementation manner, the CSI table is a CQI table, a PMI table, or an RI table.

With reference to the third aspect, in a sixth possible implementation manner, each of the resource groups includes one of the following resources:
a subframe, a subframe set, a resource block, a resource block set, a carrier, a carrier set, a CSI process, a CSI process set, a channel state information-reference signal CSI-RS, a CSI-RS set, an access point, and an access point set.

According to a fourth aspect, an embodiment of the present invention provides an information reporting method, including:

acquiring CSI configuration information that is notified by a base station side or predefined and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set; and

separately determining a corresponding CSI candidate set according to the CSI configuration information, separately obtaining, by using the corresponding CSI candidate set, CSI that needs to be reported based on the PUSCH reporting mode and/or CSI that needs to be reported based on the PUCCH reporting mode, and reporting the corresponding CSI to a base station.

With reference to the fourth aspect, in a first possible implementation manner, the method further includes: acquiring at least two resource groups notified by the base station side;

the acquiring CSI configuration information that is notified by a base station side or predefined and that is respectively corresponding to a case in which CSI is reported based on a PUSCH reporting mode and a case in which CSI is reported based on a PUCCH reporting mode includes: acquiring CSI configuration information that is notified by the base station side or predefined and that is corresponding to a case in which CSI of the at least two resource groups is reported based on the PUSCH reporting mode and CSI configuration information that is notified by the base station side or predefined and that is corresponding to a case in which CSI of the at least two resource groups is reported based on the PUCCH reporting mode; and

the separately determining a corresponding CSI candidate set according to the CSI configuration information, and separately obtaining, by using the corresponding CSI candidate set, CSI that needs to be reported based on the PUSCH reporting mode and/or CSI that needs to be reported based on the PUCCH reporting mode includes: separately determining the corresponding CSI candidate set according to the CSI configuration information that is corresponding to the case in which the CSI of the at least two resource groups is reported based on the PUSCH reporting mode, and separately obtaining, by using the corresponding CSI candidate set, CSI of the at least two resource groups that needs to be reported based on the PUSCH reporting mode; and/or separately determining the corresponding CSI candidate set according to the CSI configuration information that is corresponding to the case in which the CSI of the at least two resource groups is reported based on a PUCCH, and separately obtaining, by using the corresponding CSI candidate set, CSI of the at least two resource groups that needs to be reported based on the PUCCH reporting mode.

With reference to the fourth aspect, or with reference to the first possible implementation manner of the fourth aspect, in a second possible implementation manner, the CSI includes channel quality indicator information CQI, and/or a precoding matrix indication PMI, and/or a rank indication RI.

With reference to the fourth aspect, or with reference to the first possible implementation manner of the fourth aspect, or with reference to the second possible implementation manner of the fourth aspect, in a third possible implementation manner, the CSI candidate set includes a preset CSI table or a set consisting of a candidate entry in a preset CSI table.

With reference to the third possible implementation manner of the fourth aspect, in a fourth possible implementation manner, the CSI configuration information is bitmap signaling, and the set consisting of a candidate entry in the preset CSI table is represented by using the bitmap signaling.

With reference to the third possible implementation manner of the fourth aspect, or with reference to the fourth possible implementation manner of the fourth aspect, in a fifth possible implementation manner, the CSI table is a CQI table, a PMI table, or an RI table.

With reference to the fourth aspect, in a sixth possible implementation manner, each of the resource groups includes one of the following resources:

a subframe, a subframe set, a resource block, a resource block set, a carrier, a carrier set, a CSI process, a CSI process set, a channel state information-reference signal CSI-RS, a CSI-RS set, an access point, and an access point set.

According to a fifth aspect, an embodiment of the present invention provides an information notification method, including:

determining at least two resource groups that need to be notified to a user equipment UE, and determining modulation and coding scheme MCS configuration information that needs to be notified to the user equipment UE and that is corresponding to data transmission, where the MCS configuration information is used to indicate an MCS candidate set, and the MCS configuration information includes MCS configuration information corresponding to each of the resource groups; and

notifying the UE of the at least two resource groups, and notifying the UE of the MCS configuration information corresponding to the data transmission.

With reference to the fifth aspect, in a first possible implementation manner, the MCS candidate set includes a preset MCS table or a set consisting of a candidate entry in a preset MCS table. With reference to the fifth aspect, in a second possible implementation manner, each of the resource groups includes one of the following resources: a subframe, a subframe set, a resource block, a resource block set, a carrier, a carrier set, a CSI process, a CSI process set, a channel state information-reference signal CSI-RS, a CSI-RS set, an access point, and an access point set.

According to a sixth aspect, an embodiment of the present invention provides a data receiving method, including:

receiving at least two resource groups notified by a base station, and receiving modulation and coding scheme MCS configuration information that is notified by the base station and that is corresponding to data transmission, where the MCS configuration information is used to indicate an MCS candidate set, and the MCS configuration information includes modulation and coding scheme MCS configuration information corresponding to each of the resource groups; and

determining a corresponding MCS candidate set according to MCS configuration information that is corresponding to the at least two resource groups, and performing data receiving according to the determined MCS candidate set.

With reference to the sixth aspect, in a first possible implementation manner, the MCS candidate set includes a preset MCS table or a set consisting of a candidate entry in a preset MCS table. With reference to the sixth aspect, in a second possible implementation manner, the performing data receiving according to the determined MCS candidate set includes:

receiving, according to an MCS candidate set corresponding to a resource group to which a data transmission resource belongs, data transmitted on the resource group;
or
selecting, according to a preset rule, an MCS candidate set corresponding to a resource group, to receive data;
or
selecting, according to a preset rule, an MCS candidate set corresponding to a resource group to which a data transmission resource belongs, to receive data;
or
receiving data according to an MCS candidate set corresponding to a resource group that includes most data transmission resources.

According to a seventh aspect, an embodiment of the present invention provides an information notification device, including:

a determining unit, configured to determine at least two resource groups and channel state information CSI configuration information corresponding to each of the resource groups, where the at least two resource groups and the CSI configuration information need to be notified to a user equipment UE, and the CSI configuration information is used to indicate a CSI candidate set; and

a notification unit, configured to notify the UE of the at least two resource groups and the CSI configuration information corresponding to each of the resource groups.

With reference to the seventh aspect, in a first possible implementation manner, the CSI includes channel quality indicator information CQI, and/or a precoding matrix indication PMI, and/or a rank indication RI.
With reference to the seventh aspect, or with reference to the first possible implementation manner of the seventh aspect, in a second possible implementation manner, the CSI candidate set includes a preset CSI table or a set consisting of a candidate entry in a preset CSI table.
With reference to the second possible implementation manner of the seventh aspect, in a third possible implementation manner, the CSI configuration information is bitmap signaling, and the set consisting of a candidate entry in the preset CSI table is represented by using the bitmap signaling.
With reference to the second possible implementation manner of the seventh aspect, or with reference to the third possible implementation manner of the seventh aspect, in a fourth possible implementation manner, the CSI table is a CQI table, a PMI table, or an RI table.
With reference to the seventh aspect, in a fifth possible implementation manner, each of the resource groups includes one of the following resources:

a subframe, a subframe set, a resource block, a resource block set, a carrier, a carrier set, a channel state information CSI process, a CSI process set, a channel state information-reference signal CSI-RS, a CSI-RS set, an access point, and an access point set. According to an eighth aspect, an embodiment of the present invention provides an information reporting device, including:

a receiving unit, configured to receive at least two resource groups and CSI configuration information corresponding to each of the resource groups, where the at least two resource groups and the CSI configuration information are notified by a base station, and the CSI configuration information is used to indicate a CSI candidate set; and

a determining unit, configured to: determine the CSI candidate set according to the CSI configuration information that is notified by the base station and that is corresponding to each of the resource groups, perform CSI measurement on the resource group by using the CSI candidate set, and report CSI obtained by measurement to the base station.

With reference to the eighth aspect, in a first possible implementation manner, the CSI includes channel quality indicator information CQI, and/or a precoding matrix indication PMI, and/or a rank indication RI.

With reference to the eighth aspect, or with reference to the first possible implementation manner of the eighth aspect, in a second possible implementation manner, the CSI candidate set includes a preset CSI table or a set consisting of a candidate entry in a preset CSI table.

With reference to the second possible implementation manner of the eighth aspect, in a third possible implementation manner, the CSI configuration information is bitmap signaling, and the set consisting of a candidate entry in the preset CSI table is represented by using the bitmap signaling.

With reference to the second possible implementation manner of the eighth aspect, or with reference to the third possible implementation manner of the eighth aspect, in a fourth possible implementation manner, the CSI table is a CQI table, a PMI table, or an RI table.

With reference to the eighth aspect, in a fifth possible implementation manner, each of the resource groups includes one of the following resources:

a subframe, a subframe set, a resource block, a resource block set, a carrier, a carrier set, a CSI process, a CSI process set, a channel state information-reference signal CSI-RS, a CSI-RS set, an access point, and an access point set.

According to a ninth aspect, an embodiment of the present invention provides an information notification device, including:

a determining unit, configured to determine CSI configuration information that needs to be notified to a user equipment UE and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set; and

a notification unit, configured to notify the UE of the CSI configuration information respectively corresponding to the case in which the CSI is reported based on the PUSCH reporting mode and the case in which the CSI is reported based on the PUCCH reporting mode. With reference to the ninth aspect, in a first possible implementation manner, the determining unit is further configured to: determine at least two resource groups that need to be notified to the user equipment UE, and notify the UE of the at least two resource groups;

that the determining unit determines the CSI configuration information that needs to be notified to the UE and that is respectively corresponding to the case in which the CSI is reported based on the PUSCH reporting mode and the case in which the CSI is reported based on the PUCCH reporting mode includes: determining CSI configuration information that needs to be notified to the UE and that is corresponding to a case in which CSI of the at least two resource groups is reported based on the PUSCH reporting mode and CSI configuration information that needs to be notified to the UE and that is corresponding to a case in which CSI of the at least two resource groups is reported based on the PUCCH reporting mode; and

that the notification unit notifies the UE of the CSI configuration information respectively corresponding to the case in which the CSI is reported based on the PUSCH reporting mode and the case in which the CSI is reported based on the PUCCH reporting mode includes: notifying the UE of the CSI configuration information corresponding to the case in which the CSI of the at least two resource groups is reported based on the PUSCH reporting mode and the CSI configuration information corresponding to the case in which the CSI of the at least two resource groups is reported based on the PUCCH reporting mode.

With reference to the ninth aspect, or with reference to the first possible implementation manner of the ninth aspect, in a second possible implementation manner, the CSI includes channel quality indicator information CQI, and/or a precoding matrix indication PMI, and/or a rank indication RI.

With reference to the ninth aspect, or with reference to the first possible implementation manner of the ninth aspect, or with reference to the second possible implementation manner of the ninth aspect, in a third possible implementation manner, the CSI candidate set includes a preset CSI table or a set consisting of a candidate entry in a preset CSI table.

With reference to the third possible implementation manner of the ninth aspect, in a fourth possible implementation manner, the CSI configuration information is bitmap signaling, and the set consisting of a candidate entry in the preset CSI table is represented by using the bitmap signaling.

With reference to the third possible implementation manner of the ninth aspect, or with reference to the fourth possible implementation manner of the ninth aspect, in a fifth possible implementation manner, the CSI table is a CQI table, a PMI table, or an RI table.

With reference to the ninth aspect, in a sixth possible implementation manner, each of the resource groups includes one of the following resources:

a subframe, a subframe set, a resource block, a resource block set, a carrier, a carrier set, a CSI process, a CSI process set, a channel state information-reference signal CSI-RS, a CSI-RS set, an access point, and an access point set.

According to a tenth aspect, an embodiment of the present invention provides an information reporting device, including:

an acquiring unit, configured to acquire CSI configuration information that is notified by a base station side or predefined and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set; and
a reporting unit, configured to: separately determine a corresponding CSI candidate set according to the CSI configuration information, separately obtain, by using the corresponding CSI candidate set, CSI that needs to be reported based on the PUSCH reporting mode and/or CSI that needs to be reported based on the PUCCH reporting mode, and report the corresponding CSI to a base station.

With reference to the tenth aspect, in a first possible implementation manner, the acquiring unit is further configured to acquire at least two resource groups notified by the base station side;

that the acquiring unit acquires the CSI configuration information that is notified by the base station side or predefined and that is respectively corresponding to the case in which the CSI is reported based on the PUSCH reporting mode and the case in which the CSI is reported based on the PUCCH reporting mode includes: acquiring CSI configuration information that is notified by the base station side or predefined and that is corresponding to a case in which CSI of the at least two resource groups is reported based on the PUSCH reporting mode and CSI configuration information that is notified by the base station side or predefined and that is corresponding to a case in which CSI of the at least two resource groups is reported based on the PUCCH reporting mode; and
that the reporting unit separately determines the corresponding CSI candidate set according to the CSI configuration information, and separately obtains, by using the corresponding CSI candidate set, the CSI that needs to be reported based on the PUSCH reporting mode and/or the CSI that needs to be reported based on the PUCCH reporting mode includes: separately determining the corresponding CSI candidate set according to the CSI configuration information that is corresponding to the case in which the CSI of the at least two resource groups is reported based on the PUSCH reporting mode, and separately obtaining, by using the corresponding CSI candidate set, CSI of the at least two resource groups that needs to be reported based on the PUSCH reporting mode; and/or separately determining the corresponding CSI candidate set according to the CSI configuration information that is corresponding to the case in which the CSI of the at least two resource groups is reported based on a PUCCH, and separately obtaining, by using the corresponding CSI candidate set, CSI of the at least two resource groups that needs to be reported based on the PUCCH reporting mode.

With reference to the tenth aspect, or with reference to the first possible implementation manner of the tenth aspect, in a second possible implementation manner, the CSI includes channel quality indicator information CQI, and/or a precoding matrix indication PMI, and/or a rank indication RI.

With reference to the tenth aspect, or with reference to the first possible implementation manner of the tenth aspect, or with reference to the second possible implementation manner of the tenth aspect, in a third possible implementation manner, the CSI candidate set includes a preset CSI table or a set consisting of a candidate entry in a preset CSI table.

With reference to the third possible implementation manner of the tenth aspect, in a fourth possible implementation manner, the CSI configuration information is bitmap signaling, and the set consisting of a candidate entry in the preset CSI table is represented by using the bitmap signaling.

With reference to the third possible implementation manner of the tenth aspect, or with reference to the fourth possible implementation manner of the tenth aspect, in a fifth possible implementation manner, the CSI table is a CQI table, a PMI table, or an RI table.

With reference to the tenth aspect, in a sixth possible implementation manner, each of the resource groups includes one of the following resources:

a subframe, a subframe set, a resource block, a resource block set, a carrier, a carrier set, a CSI process, a CSI process set, a channel state information-reference signal CSI-RS, a CSI-RS set, an access point, and an access point set.

According to an eleventh aspect, an embodiment of the present invention provides an information notification device, including:

a determining unit, configured to: determine at least two resource groups that need to be notified to a user equipment UE, and determine modulation and coding scheme MCS configuration information that needs to be notified to the user equipment UE and that is corresponding to data transmission, where the MCS configuration information is used to indicate an MCS candidate set, and the MCS configuration information includes MCS configuration information corresponding to each of the resource groups; and

a notification unit, configured to: notify the UE of the at least two resource groups and notify the UE of the MCS configuration information corresponding to the data transmission. With reference to the eleventh aspect, in a first possible implementation manner, the MCS candidate set includes a preset MCS table or a set consisting of a candidate entry in a preset MCS table.

With reference to the eleventh aspect, in a second possible implementation manner, each of the resource groups includes one of the following resources:

a subframe, a subframe set, a resource block, a resource block set, a carrier, a carrier set, a CSI process, a CSI process set, a channel state information-reference signal CSI-RS, a CSI-RS set, an access point, and an access point set.

According to a twelfth aspect, an embodiment of the present invention provides a data receiving device, including:

a receiving unit, configured to: receive at least two resource groups notified by a base station, and receive modulation and coding scheme MCS configuration information that is notified by the base station and that is corresponding to data transmission, where the MCS configuration information is used to indicate an MCS candidate set, and the MCS configuration information includes modulation and coding scheme MCS configuration information corresponding to each of the resource groups; and

a determining unit, configured to determine a corresponding MCS candidate set according to MCS configuration information that is corresponding to the at least two resource groups, where

the receiving unit is further configured to perform data receiving according to the determined MCS candidate set.

With reference to the twelfth aspect, in a first possible implementation manner, the MCS candidate set includes a preset MCS table or a set consisting of a candidate entry in a preset MCS table.

With reference to the twelfth aspect, in a first possible implementation manner, that the receiving unit performs the data receiving according to the determined MCS candidate set includes:

receiving, according to an MCS candidate set corresponding to a resource group to which a data transmission resource belongs, data transmitted on the resource group;

or

selecting, according to a preset rule, an MCS candidate set corresponding to a resource group, to receive data;

or

selecting, according to a preset rule, an MCS candidate set corresponding to a resource group to which a data transmission resource belongs, to receive data;

or

receiving data according to an MCS candidate set corresponding to a resource group that includes most data transmission resources.

According to a thirteenth aspect, an embodiment of the present invention provides an information notification device, including:

a processor, configured to determine at least two resource groups and channel state information CSI configuration information corresponding to each of the resource groups, where the at least two resource groups and the CSI configuration information need to be notified to a user equipment UE, and the CSI configuration information is used to indicate a CSI candidate set; and

a transmitter, configured to notify the UE of the at least two resource groups and the CSI configuration information corresponding to each of the resource groups.

With reference to the thirteenth aspect, in a first possible implementation manner, the CSI includes channel quality indicator information CQI, and/or a precoding matrix indication PMI, and/or a rank indication RI.

With reference to the thirteenth aspect, or with reference to the first possible implementation manner of the thirteenth aspect, in a second possible implementation manner, the CSI candidate set includes a preset CSI table or a set consisting of a candidate entry in a preset CSI table.

With reference to the second possible implementation manner of the thirteenth aspect, in a third possible implementation manner, the CSI configuration information is bitmap signaling, and the set consisting of a candidate entry in the preset CSI table is represented by using the bitmap signaling.

With reference to the second possible implementation manner of the thirteenth aspect, or with reference to the third possible implementation manner of the thirteenth aspect, in a fourth possible implementation manner, the CSI table is a CQI table, a PMI table, or an RI table.

With reference to the thirteenth aspect, in a fifth possible implementation manner, each of the resource groups includes one of the following resources:

a subframe, a subframe set, a resource block, a resource block set, a carrier, a carrier set, a channel state information CSI process, a CSI process set, a channel state information-reference signal CSI-RS, a CSI-RS set, an access point, and an access point set. According to a fourteenth aspect, an embodiment of the present invention provides an information reporting device, where:
the transceiver receives at least two resource groups and CSI configuration information corresponding to each of the resource groups, where the at least two resource groups and the CSI configuration information are notified by a base station, and the CSI configuration information is used to indicate a CSI candidate set;
the processor determines the CSI candidate set according to the CSI configuration information that is notified by the base station and that is corresponding to each of the resource groups, and performs CSI measurement on the resource group by using the CSI candidate set; and
the transceiver reports CSI obtained by the processor by measurement to the base station.

With reference to the fourteenth aspect, in a first possible implementation manner, the CSI includes channel quality indicator information CQI, and/or a precoding matrix indication PMI, and/or a rank indication RI.

With reference to the fourteenth aspect, or with reference to the first possible implementation manner of the fourteenth aspect, in a second possible implementation manner, the CSI candidate set includes a preset CSI table or a set consisting of a candidate entry in a preset CSI table.

With reference to the second possible implementation manner of the fourteenth aspect, in a third possible implementation manner, the CSI configuration information is bitmap signaling, and the set consisting of a candidate entry in the preset CSI table is represented by using the bitmap signaling.

With reference to the second possible implementation manner of the fourteenth aspect, or with reference to the third possible implementation manner of the fourteenth aspect, in a fourth possible implementation manner, the CSI table is a CQI table, a PMI table, or an RI table.

With reference to the fourteenth aspect, in a fifth possible implementation manner, each of the resource groups includes one of the following resources:
a subframe, a subframe set, a resource block, a resource block set, a carrier, a carrier set, a CSI process, a CSI process set, a channel state information-reference signal CSI-RS, a CSI-RS set, an access point, and an access point set.

According to a fifteenth aspect, an embodiment of the present invention provides an information notification device, including:

a processor, configured to determine CSI configuration information that needs to be notified to a user equipment UE and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set; and
a transmitter, configured to notify the UE of the CSI configuration information respectively corresponding to the case in which the CSI is reported based on the PUSCH reporting mode and the case in which the CSI is reported based on the PUCCH reporting mode. With reference to the fifteenth aspect, in a first possible implementation manner, the processor is further configured to: determine at least two resource groups that need to be notified to the user equipment UE, and notify the UE of the at least two resource groups;
that the processor determines the CSI configuration information that needs to be notified to the UE and that is respectively corresponding to the case in which the CSI is reported based on the PUSCH reporting mode and the case in which the CSI is reported based on the PUCCH reporting mode includes: determining CSI configuration information that needs to be notified to the UE and that is corresponding to a case in which CSI of the at least two resource groups is reported based on the PUSCH reporting mode and CSI configuration information that needs to be notified to the UE and that is corresponding to a case in which CSI of the at least two resource groups is reported based on the PUCCH reporting mode; and

that the transmitter notifies the UE of the CSI configuration information respectively corresponding to the case in which the CSI is reported based on the PUSCH reporting mode and the case in which the CSI is reported based on the PUCCH reporting mode includes: notifying the UE of the CSI configuration information corresponding to the case in which the CSI of the at least two resource groups is reported based on the PUSCH reporting mode and the CSI configuration information corresponding to the case in which the CSI of the at least two resource groups is reported based on the PUCCH reporting mode.

With reference to the fifteenth aspect, or with reference to the first possible implementation manner of the fifteenth aspect, in a second possible implementation manner, the CSI includes channel quality indicator information CQI, and/or a precoding matrix indication PMI, and/or a rank indication RI.

With reference to the fifteenth aspect, or with reference to the first possible implementation manner of the fifteenth aspect, or with reference to the second possible implementation manner of the fifteenth aspect, in a third possible implementation manner, the CSI candidate set includes a preset CSI table or a set consisting of a candidate entry in a preset CSI table.

With reference to the third possible implementation manner of the fifteenth aspect, in a fourth possible implementation manner, the CSI configuration information is bitmap signaling, and the set consisting of a candidate entry in the preset CSI table is represented by using the bitmap signaling.

With reference to the third possible implementation manner of the fifteenth aspect, or with reference to the fourth possible implementation manner of the fifteenth aspect, in a fifth possible implementation manner, the CSI table is a CQI table, a PMI table, or an RI table.

With reference to the fifteenth aspect, in a sixth possible implementation manner, each of the resource groups includes one of the following resources:

a subframe, a subframe set, a resource block, a resource block set, a carrier, a carrier set, a CSI process, a CSI process set, a channel state information-reference signal CSI-RS, a CSI-RS set, an access point, and an access point set.

According to a sixteenth aspect, an embodiment of the present invention provides an information reporting device, where:

the processor acquires CSI configuration information that is notified by a base station side or predefined and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set; the processor separately determines a corresponding CSI candidate set according to the CSI configuration information, and separately obtains, by using the corresponding CSI candidate set, CSI that needs to be reported based on the PUSCH reporting mode and/or CSI that needs to be reported based on the PUCCH reporting mode; and the corresponding CSI is reported to a base station by using the transceiver.

With reference to the sixteenth aspect, in a first possible implementation manner, the transceiver is further configured to acquire at least two resource groups notified by the base station side;

that the processor acquires the CSI configuration information that is notified by the base station side or predefined and that is respectively corresponding to the case in which the CSI is reported based on the PUSCH reporting mode and the case in which the CSI is reported based on the PUCCH reporting mode includes: acquiring CSI configuration information that is notified by the base station side or predefined and that is corresponding to a case in which CSI of the at least two resource groups is reported based on the PUSCH reporting mode and CSI configuration information that is notified by the base station side or predefined and that is corresponding to a case in which CSI of the at least two resource groups is reported based on the PUCCH reporting mode; and

that the transceiver separately determines the corresponding CSI candidate set according to the CSI configuration information, and separately obtains, by using the corresponding CSI candidate set, the CSI that needs to be reported based on the PUSCH reporting mode and/or the CSI that needs to be reported based on the PUCCH reporting mode includes: separately determining the corresponding CSI candidate set according to the CSI configuration information that is corresponding to the case in which the CSI of the at least two resource groups is reported based on the PUSCH reporting mode, and separately obtaining, by using the corresponding CSI candidate set, CSI of the at least two resource groups that needs to be reported based on the PUSCH reporting mode; and/or separately determining the corresponding CSI candidate set according to the CSI configuration information that is corresponding to the case in which the CSI of the at least two resource groups is reported based on a PUCCH, and separately obtaining, by using the corresponding CSI candidate set, CSI of the at least two resource groups that needs to be reported based on the PUCCH reporting mode.

With reference to the sixteenth aspect, or with reference to the first possible implementation manner of the sixteenth aspect, in a second possible implementation manner, the CSI includes channel quality indicator information CQI, and/or a precoding matrix indication PMI, and/or a rank indication RI.

With reference to the sixteenth aspect, or with reference to the first possible implementation manner of the sixteenth aspect, or with reference to the second possible implementation manner of the sixteenth aspect, in a third possible implementation manner, the CSI candidate set includes a preset CSI table or a set consisting of a candidate entry in a preset CSI table.

With reference to the third possible implementation manner of the sixteenth aspect, in a fourth possible implementation manner, the CSI configuration information is bitmap signaling, and the set consisting of a candidate entry in the preset CSI table is represented by using the bitmap signaling.

With reference to the third possible implementation manner of the sixteenth aspect, or with reference to the fourth possible implementation manner of the sixteenth aspect, in a fifth possible implementation manner, the CSI table is a CQI table, a PMI table, or an RI table.

With reference to the sixteenth aspect, in a sixth possible implementation manner, each of the resource groups includes one of the following resources:

a subframe, a subframe set, a resource block, a resource block set, a carrier, a carrier set, a CSI process, a CSI process set, a channel state information-reference signal CSI-RS, a CSI-RS set, an access point, and an access point set.

According to a seventeenth aspect, an embodiment of the present invention provides an information notification device, including:

a processor, configured to: determine at least two resource groups that need to be notified to a user equipment UE, and determine modulation and coding scheme MCS configuration information that needs to be notified to the user equipment UE and that is corresponding to data transmission, where the MCS configuration information is used to indicate an MCS candidate set, and the MCS configuration information includes MCS configuration information corresponding to each of the resource groups; and

a transmitter, configured to: notify the UE of the at least two resource groups and notify the UE of the MCS configuration information corresponding to the data transmission. With reference to the seventeenth aspect, in a first possible implementation manner, the MCS candidate set includes a preset MCS table or a set consisting of a candidate entry in a preset MCS table.

With reference to the seventeenth aspect, in a second possible implementation manner, each of the resource groups includes one of the following resources:

a subframe, a subframe set, a resource block, a resource block set, a carrier, a carrier set, a CSI process, a CSI process set, a channel state information-reference signal CSI-RS, a CSI-RS set, an access point, and an access point set.

According to an eighteenth aspect, an embodiment of the present invention provides a data receiving device, including:

a receiver, configured to: receive at least two resource groups notified by a base station, and receive modulation and coding scheme MCS configuration information that is notified by the base station and that is corresponding to data transmission, where the MCS configuration information is used to indicate an MCS candidate set, and the MCS configuration information includes modulation and coding scheme MCS configuration information corresponding to each of the resource groups; and

a processor, configured to determine a corresponding MCS candidate set according to MCS configuration information that is corresponding to the at least two resource groups, where

the receiver is further configured to perform data receiving according to the determined MCS candidate set.

With reference to the eighteenth aspect, in a first possible implementation manner, the MCS candidate set includes a preset MCS table or a set consisting of a candidate entry in a preset MCS table.

With reference to the eighteenth aspect, in a second possible implementation manner, that the receiver performs data receiving according to the determined MCS candidate set includes:

receiving, according to an MCS candidate set corresponding to a resource group to which a data transmission resource belongs, data transmitted on the resource group;
or
selecting, according to a preset rule, an MCS candidate set corresponding to a resource group, to receive data;
or

selecting, according to a preset rule, an MCS candidate set corresponding to a resource group to which a data transmission resource belongs, to receive data;
or
receiving data according to an MCS candidate set corresponding to a resource group that includes most data transmission resources.

In the embodiments of the present invention, at least two resource groups and channel state information CSI configuration information corresponding to each of the resource groups are determined, where the at least two resource groups and the CSI configuration information need to be notified to a user equipment UE, and the CSI configuration information is used to indicate a CSI candidate set; the at least two resource groups and the CSI configuration information corresponding to each of the resource groups are notified to the UE, so that the UE can be controlled to perform more precise CSI measurement on a specific measurement resource.

In the embodiments of the present invention, at least two resource groups and CSI configuration information corresponding to each of the resource groups are received, where the at least two resource groups and the CSI configuration information are notified by a base station, and the CSI configuration information is used to indicate a CSI candidate set; the CSI candidate set is determined according to the CSI configuration information that is notified by the base station and that is corresponding to each of the resource groups, CSI measurement is performed on the resource group by using the CSI candidate set, and CSI obtained by measurement is reported to the base station. Therefore, a UE can perform more precise CSI measurement and reporting on a specific measurement resource.

In the embodiments of the present invention, CSI configuration information that needs to be notified to a user equipment UE and that is respectively corresponding to a case in which a CQI is reported based on a physical uplink shared channel PUSCH reporting mode and a case in which a CQI is reported based on a physical uplink control channel PUCCH reporting mode is determined, where the CSI configuration information is used to indicate a CSI candidate set; the CSI configuration information respectively corresponding to the case in which the CQI is reported based on the PUSCH mode and the case in which the CQI is reported based on the PUCCH mode is notified to the UE, so that the UE can be controlled to perform more precise CSI measurement on a specific measurement resource.

In the embodiments of the present invention, CSI configuration information that is notified by a base station side or predefined and that is respectively corresponding to a case in which CSI is reported based on a physical uplink shared channel PUSCH reporting mode and a case in which CSI is reported based on a physical uplink control channel PUCCH reporting mode is acquired, where the CSI configuration information is used to indicate a CSI candidate set; a corresponding CSI candidate set is separately determined according to the CSI configuration information, CSI that needs to be reported based on the PUSCH reporting mode and/or CSI that needs to be reported based on the PUCCH reporting mode are/is separately obtained by using the corresponding CSI candidate set, and the corresponding CSI is reported to a base station. Therefore, a UE can perform more precise CSI measurement and reporting on a specific measurement resource.

In the embodiments of the present invention, at least two resource groups that need to be notified to a user equipment UE are determined, and the at least two resource groups are notified to the UE; modulation and coding scheme MCS configuration information that needs to be notified to the user equipment UE and that is corresponding to data transmission is determined, where the MCS configuration information is used to indicate an MCS candidate set, and the MCS configuration information includes MCS configuration information corresponding to each of the resource groups; the MCS configuration information corresponding to the data transmission is notified to the UE, so that the UE is controlled to receive data more efficiently on a specific transmission resource.

In the embodiments of the present invention, at least two resource groups notified by a base station are received; modulation and coding scheme MCS configuration information that is notified by the base station and that is corresponding to data transmission is received, where the MCS configuration information is used to indicate an MCS candidate set, and the MCS configuration information includes modulation and coding scheme MCS configuration information corresponding to each of the resource groups; a corresponding MCS candidate set is determined according MCS configuration information that is corresponding to different resource groups, and data receiving is performed according to the determined MCS candidate set. Therefore, a UE receives data more efficiently on a specific transmission resource.

**BRIEF DESCRIPTION OF DRAWINGS**

FIG. 1 is a schematic flowchart of a first information notification method according to an embodiment of the present invention;
FIG. 2 is a schematic flowchart of a first information reporting method according to an embodiment of the present invention;

FIG. 3 is a schematic flowchart of a second information notification method according to an embodiment of the present invention;

FIG. 4 is a schematic flowchart of a second information reporting method according to an embodiment of the present invention;

FIG. 5 is a schematic flowchart of a third information notification method according to an embodiment of the present invention;

FIG. 6 is a schematic flowchart of a third information reporting method according to an embodiment of the present invention;

FIG. 7 is a schematic flowchart of a fourth information notification method according to an embodiment of the present invention;

FIG. 8 is a schematic flowchart of a data receiving method according to an embodiment of the present invention;

FIG. 9 is a schematic structural diagram of a first information notification device according to an embodiment of the present invention;

FIG. 10 is a schematic structural diagram of a first information reporting device according to an embodiment of the present invention;

FIG. 11 is a schematic structural diagram of a second information reporting device according to an embodiment of the present invention;

FIG. 12 is a schematic structural diagram of a fourth information notification device according to an embodiment of the present invention; and

FIG. 13 is a schematic structural diagram of a third information reporting device according to an embodiment of the present invention.

## DESCRIPTION OF EMBODIMENTS

In embodiments of the present invention, multiple CSI tables and multiple MCS tables that include different modulation schemes and support different ranges of signal-to-noise ratios are configured on a network side and a UE side in advance, so that a UE can perform precise CSI measurement on a specific measurement resource by using a corresponding CSI table, or receive data more efficiently on a specific transmission resource by using a corresponding MCS table. A base station notifies the UE of at least two resource groups, and the base station notifies the UE of CSI configuration information that is respectively corresponding to the at least two resource groups, so that the UE separately obtains, according to the CSI configuration information, CSI corresponding to each resource in at least one resource group of the at least two resource groups, and the UE reports the CSI to the base station.

Further, the base station notifies the UE of CSI configuration information corresponding to a resource not in the at least two resource groups, so that the UE obtains, according to the CSI configuration information, CSI corresponding to the resource not in the at least two resource groups, and the UE reports the CSI to the base station.

Alternatively, CSI configuration information or a CSI candidate set that is corresponding to a resource not in the at least two resource groups is predefined, so that the UE obtains, according to the CSI configuration information or the CSI candidate set, CSI corresponding to the resource not in the at least two resource groups, and the UE reports the CSI to the base station. The "predefined" may mean "preset".

The CSI includes: a CQI, and/or a precoding matrix indication (PMI), and/or a rank indication (RI).

The CSI candidate set includes a preset CSI table or a set consisting of a candidate entry in a preset CSI table.

The CSI configuration information is bitmap signaling, and the set consisting of a candidate entry in the preset CSI table is represented by using the bitmap signaling.

The CSI table is a CQI table, a PMI table, or an RI table.

In this embodiment of the present invention, CSI configuration information notified by a base station side to a UE may be configuration information of any one or more types of information in a CQI, a PMI, and an RI, and the UE may measure and report the any one or more types of information in the CQI, the PMI, and the RI according the configuration information of the any one or more types of information in the CQI, the PMI, and the RI. Therefore, a preset CSI table may also be one or more of the following: a CQI table, a PMI table, and an RI table. Specifically, the resource group may be a subframe, a subframe set, a resource block (Resource Block, RB), an RB set, a carrier, a carrier set, a CSI process or a CSI process set, a channel state information-reference signal (Channel State Information-Reference Resource, CSI-RS) or a CSI-RS set, or an access point or an access point set. Alternatively, the resource group may be a combination of at least two of the following: a subframe, a subframe set, a resource block, a resource block set, a carrier, a carrier set, a CSI process, a CSI process set, a CSI-RS, a CSI-RS set, an access point, and an access point set.

Specifically, the carrier may refer to a component carrier (Component Carrier, CC); the access point may refer to a base station corresponding to a cell, a remote radio unit (Remote Radio Unit, RRU), a remote radio head (Remote Radio Head, RRH), a macro cell, a small cell, a micro cell, a home eNodeB, or the like; the CSI process consists of a non-zero power CSI-RS resource and a CSI interference measurement (Channel State Information-Interference Measurement, CSI-IM) resource, where the UE acquires a downlink channel according to the non-zero power CSI-RS and performs interference measurement according to the CSI-IM, and calculates CSI according to the downlink channel and a result of the interference measurement and reports the CSI to the base station.

Specifically, the following three CQI tables list three different CQI candidate sets.

**Table 1 First CQI table**

| CQI index (index) | Modulation (modulation) | Code rate (code rate) x 1024 | Spectral efficiency (efficiency) |
|---|---|---|---|
| 0 | Out of range (out of range) | | |
| 1 | Quadrature phase shift keying (Quadrature Phase Shift Keying, QPSK) | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

**Table 2 Second CQI table**

| CQI index (index) | Modulation (modulation) | Code rate (code rate) x 1024 | Spectral efficiency (efficiency) |
|---|---|---|---|
| 0 | Out of range (out of range) | | |
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 778 | 6.0800 |

(continued)

| CQI index (index) | Modulation (modulation) | Code rate (code rate) x 1024 | Spectral efficiency (efficiency) |
|---|---|---|---|
| 14 | 256QAM | 860 | 6.7200 |
| 15 | 256QAM | 942 | 7.3600 |

**Table 3 Third CQI table**

| CQI index (index) | Modulation (modulation) | Code rate (code rate) x 1024 | Spectral efficiency (efficiency) |
|---|---|---|---|
| 0 | Out of range (out of range) | | |
| 1 | QPSK | 308 | 0.6016 |
| 2 | QPSK | 449 | 0.8770 |
| 3 | QPSK | 602 | 1.1758 |
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 778 | 6.0800 |
| 14 | 256QAM | 860 | 6.7200 |
| 15 | 256QAM | 942 | 7.3600 |

In the foregoing example, a difference between the three CQI tables lies in that: compared with the first CQI table, the second CQI table includes a modulation scheme of a higher modulation order (256QAM) and supports a wider range of signal-to-noise ratios. Compared with the first CQI table, the third CQI table includes a modulation scheme of a higher modulation order (256QAM). Compared with the third CQI table, the second CQI table supports a wider range of signal-to-noise ratios (supports a range of low signal-to-noise ratios), but quantization precision of the third CQI table is higher, that is, a difference between signal-to-noise ratios corresponding to adjacent entries is smaller.

Specifically, when a CQI candidate set includes one of M preset CQI tables, the CQI configuration information is N-bit signaling and is used to indicate one of the M preset CQI tables, where M is a positive integer, and N is an integer not less than log2(M), where log2(M) represents the logarithm of M to base 2.

When the CQI candidate set includes a set consisting of a candidate entry in a preset CQI table, the CQI configuration information is bitmap (bitmap) signaling, and the set consisting of a candidate entry in the preset CQI table is represented by using the bitmap signaling. Specifically, assuming that the preset CQI table has X candidate entries, the bitmap signaling includes Y bits, where each of the bits corresponds to at least one of the candidate entries. If a bit in the bitmap signaling is 1, a candidate entry corresponding to the bit belongs to the CQI candidate set; if a bit in the bitmap signaling is 0, a candidate entry corresponding to the bit does not belong to the CQI candidate set; where X is a positive integer, and Y is a positive integer less than or equal to X. It should be noted that, Y may be equal to X, and in this case, each bit in the bitmap signaling corresponds to one candidate entry; or Y may be less than X, and in this case, each bit in the bitmap signaling corresponds to one or more candidate entries, and an overhead of CQI configuration information can be reduced.

Specifically, Table 4 lists a preset PMI and RI table used for two antenna ports.

**Table 4 PMI and RI table**

| PMI | RI | |
|---|---|---|
| | 1 | 2 |
| 0 | $\dfrac{1}{\sqrt{2}}\begin{bmatrix}1\\1\end{bmatrix}$ | $\dfrac{1}{\sqrt{2}}\begin{bmatrix}1 & 0\\0 & 1\end{bmatrix}$ |
| 1 | $\dfrac{1}{\sqrt{2}}\begin{bmatrix}1\\-1\end{bmatrix}$ | $\dfrac{1}{2}\begin{bmatrix}1 & 1\\1 & -1\end{bmatrix}$ |
| 2 | $\dfrac{1}{\sqrt{2}}\begin{bmatrix}1\\j\end{bmatrix}$ | $\dfrac{1}{2}\begin{bmatrix}1 & 1\\j & -j\end{bmatrix}$ |
| 3 | $\dfrac{1}{\sqrt{2}}\begin{bmatrix}1\\-j\end{bmatrix}$ | - |

Specifically, a PMI and RI candidate set includes a set consisting of a candidate entry in the preset PMI and RI table, where the PMI and RI configuration information is bitmap (bitmap) signaling, and the set consisting of a candidate entry in the preset PMI and RI table is represented by using the bitmap signaling.

The following two PMI tables list two different PMI candidate sets used for two antenna ports and one data flow.

**Table 5 First PMI table**

| PMI | Precoding matrix |
|---|---|
| 0 | $\dfrac{1}{\sqrt{2}}\begin{bmatrix}1\\1\end{bmatrix}$ |
| 1 | $\dfrac{1}{\sqrt{2}}\begin{bmatrix}1\\-1\end{bmatrix}$ |
| 2 | $\dfrac{1}{\sqrt{2}}\begin{bmatrix}1\\j\end{bmatrix}$ |
| 3 | $\dfrac{1}{\sqrt{2}}\begin{bmatrix}1\\-j\end{bmatrix}$ |

**Table 6 Second PMI table**

| PMI | Precoding matrix |
|---|---|
| 0 | $\dfrac{1}{\sqrt{2}}\begin{bmatrix}1\\e^{j\pi i/4}\end{bmatrix}$ |
| 1 | $\dfrac{1}{\sqrt{2}}\begin{bmatrix}1\\e^{-j\pi i/4}\end{bmatrix}$ |

(continued)

| PMI | Precoding matrix |
|-----|-----------------|
| 2 | $\dfrac{1}{\sqrt{2}}\begin{bmatrix} 1 \\ e^{3j\pi i/4} \end{bmatrix}$ |
| 3 | $\dfrac{1}{\sqrt{2}}\begin{bmatrix} 1 \\ e^{-3j\pi i/4} \end{bmatrix}$ |

In the foregoing example, a difference between the two PMI tables lies in that the two PMI tables include different precoding matrices.

Specifically, a PMI candidate set includes one of two preset PMI tables, where the PMI configuration information is 2-bit signaling and is used to indicate one of the two preset PMI tables.

The following two RI tables list two different RI candidate sets used for four antenna ports.

**Table 7 First RI table**

| RI | Value |
|----|-------|
| 0 | 1 |
| 1 | 2 |
| 2 | 3 |
| 3 | 4 |

**Table 8 Second RI table**

| RI | Value |
|----|-------|
| 0 | 1 |
| 1 | 2 |

In the foregoing example, a difference between the two RI tables lies in that: compared with the second RI table, the first RI table includes a higher rank.

Specifically, an RI candidate set includes one of the two preset RI tables, where the RI configuration information is 2-bit signaling and is used to indicate one of the two preset RI tables.

Further, the base station notifies the UE of MCS (modulation and coding scheme, Modulation and Coding Scheme) configuration information respectively corresponding to the at least two resource groups, so that the UE receives data according to the MCS configuration information. Still further, the base station notifies the UE of MCS configuration information corresponding to the resource not in the at least two resource groups, so that the UE receives data according to the MCS configuration information.

Alternatively, MCS configuration information or an MCS candidate set corresponding to the resource not in the at least two resource groups is predefined, so that the UE receives data according to the MCS configuration information or the MCS candidate set.

Specifically, the MCS configuration information is used to indicate an MCS candidate set, where the MCS candidate set may be an MCS table or a set consisting of a candidate entry in an MCS table. The following two MCS tables list two different MCS candidate sets.

**Table 9 First MCS table**

| MCS index (Index) | Modulation order (Modulation Order) | Transport block set (Transport Block Set, TBS) Index |
|-------------------|-------------------------------------|-------------------------------------------------------|
| 0 | 2 | 0 |

(continued)

| MCS index (Index) | Modulation order (Modulation Order) | Transport block set (Transport Block Set, TBS) Index |
|---|---|---|
| 1 | 2 | 1 |
| 2 | 2 | 2 |
| 3 | 2 | 3 |
| 4 | 2 | 4 |
| 5 | 2 | 5 |
| 6 | 2 | 6 |
| 7 | 2 | 7 |
| 8 | 2 | 8 |
| 9 | 2 | 9 |
| 10 | 4 | 9 |
| 11 | 4 | 10 |
| 12 | 4 | 11 |
| 13 | 4 | 12 |
| 14 | 4 | 13 |
| 15 | 4 | 14 |
| 16 | 4 | 15 |
| 17 | 6 | 15 |
| 18 | 6 | 16 |
| 19 | 6 | 17 |
| 20 | 6 | 18 |
| 21 | 6 | 19 |
| 22 | 6 | 20 |
| 23 | 6 | 21 |
| 24 | 6 | 22 |
| 25 | 6 | 23 |
| 26 | 6 | 24 |
| 27 | 6 | 25 |
| 28 | 6 | 26 |
| 29 | 2 | Reserved (reserved) |
| 30 | 4 | |
| 31 | 6 | |

**Table 10 Second MCS table**

| MCS index (Index) | Modulation order (Modulation Order) | Transport block set (Transport Block Set, TBS) Index |
|---|---|---|
| 0 | 2 | 0 |
| 1 | 2 | 2 |

(continued)

| MCS index (Index) | Modulation order (Modulation Order) | Transport block set (Transport Block Set, TBS) Index |
|---|---|---|
| 2 | 2 | 4 |
| 3 | 2 | 6 |
| 4 | 2 | 8 |
| 5 | 4 | 9 |
| 6 | 4 | 11 |
| 7 | 4 | 13 |
| 8 | 4 | 14 |
| 9 | 4 | 15 |
| 10 | 6 | 16 |
| 11 | 6 | 17 |
| 12 | 6 | 18 |
| 13 | 6 | 19 |
| 14 | 6 | 20 |
| 15 | 6 | 21 |
| 16 | 6 | 22 |
| 17 | 6 | 23 |
| 18 | 6 | 24 |
| 19 | 6 | 25 |
| 20 | 6 | 26 |
| 21 | 8 | 26 |
| 22 | 8 | 27 |
| 23 | 8 | 28 |
| 24 | 8 | 29 |
| 25 | 8 | 30 |
| 26 | 8 | 31 |
| 27 | 8 | 32 |
| 28 | 2 | Reserved (reserved) |
| 29 | 4 | |
| 30 | 6 | |
| 31 | 8 | |

In the foregoing example, a difference between the two MCS tables lies in that: compared with the first MCS table, the second MCS table includes a modulation scheme of a higher modulation order (256QAM).

The following introduces a first implementation manner provided in an embodiment of the present invention.

The following uses an example in which CSI includes a CQI, to provide specific descriptions respectively according to different cases, and describes corresponding beneficial effects. A case in which the CSI includes a PMI or an RI is similar to this implementation manner, and details are not described again.

Example 1: A resource group refers to a subframe set.

A base station notifies a UE of at least two subframe sets, and the base station notifies the UE of CQI configuration information respectively corresponding to the at least two subframe sets, so that the UE separately obtains, according to the CQI configuration information, a CQI corresponding to a CQI measurement reference subframe in at least one subframe set of the at least two subframe sets, and the UE reports the CQI to the base station, where the CQI measurement reference subframe refers to a subframe used to perform CQI measurement.

For example, the base station configures two subframe sets for the UE, where the two subframe sets are a subframe set A and a subframe set B respectively, and the base station notifies the UE of CQI configuration information corresponding to the subframe set A and CQI configuration information corresponding to the subframe set B. Specifically, the subframe set A includes a slightly interfered subframe, and the subframe set B includes a severely interfered subframe. Therefore, an SINR of a signal transmitted in a subframe included in the subframe set A is relatively large, and an SINR of a signal transmitted in a subframe included in the subframe set B is relatively small. In this case, the CQI configuration information corresponding to the subframe set A may be used to indicate a CQI table A, such as the second CQI table or the third CQI table described above, and the CQI configuration information corresponding to the subframe set B may be used to indicate a CQI table B, such as the first CQI table described above. Compared with the CQI table B, the CQI table A includes a modulation scheme whose modulation order is higher than 64QAM, for example, 256QAM.

The UE separately determines, according to the CQI configuration information notified by the base station, CQI tables corresponding to the two subframe sets, and separately measures CQIs of subframes in the two subframe sets according to the two CQI tables. Specifically, if the CQI measurement reference subframe belongs to the subframe set A, the UE obtains the CQI according to the CQI table A; if the CQI measurement reference subframe belongs to the subframe set B, the UE obtains the CQI according to the CQI table B.

Further, the base station notifies the UE of MCS configuration information respectively corresponding to the at least two subframe sets, so that the UE receives data according to the MCS configuration information.

Specifically, the UE determines an MCS candidate set according to MCS configuration information corresponding to a subframe set to which a data transmission subframe belongs, and receives data according to the MCS candidate set.

The foregoing example continues to be used. The base station notifies the UE of MCS configuration information corresponding to the subframe set A and MCS configuration information corresponding to the subframe set B. The MCS configuration information corresponding to the subframe set A may be used to indicate an MCS table A, such as the second MCS table described above, and the MCS configuration information corresponding to the subframe set B may be used to indicate an MCS table B, such as the first MCS table described above. Compared with the MCS table B, the MCS table A includes a modulation scheme whose modulation order is higher than 64QAM, for example, 256QAM.

The UE separately determines, according to the MCS configuration information notified by the base station, MCS tables corresponding to the two subframe sets, and separately receives, according to the two MCS tables, data transmitted in subframes in the two subframe sets. Specifically, if the data transmission subframe belongs to the subframe set A, the UE determines a modulation and coding scheme for data according to the MCS table A, and then receives the data; if the data transmission subframe belongs to the subframe set B, the UE determines a modulation and coding scheme for data according to the MCS table B, and then receives the data.

Further, the base station notifies the UE of the MCS configuration information respectively corresponding to the at least two subframe sets, and MCS configuration information or an MCS candidate set corresponding to a subframe not in the at least two subframe sets is notified by the base station to the UE or predefined, so that the UE receives data according to the MCS configuration information.

Specifically, the UE determines the MCS candidate set according to the MCS configuration information corresponding to the subframe set to which the data transmission subframe belongs, and receives data according to the MCS candidate set. If the data transmission subframe does not belong to any one of the at least two subframe sets, the UE receives data according to the MCS configuration information or the MCS candidate set corresponding to the subframe not in the two at least subframe sets.

The foregoing example continues to be used. The base station notifies the UE of MCS configuration information corresponding to the subframe set A and MCS configuration information corresponding to the subframe set B, and MCS configuration information or an MCS candidate set corresponding to a subframe not in the two subframe sets is notified by the base station to the UE or predefined. The MCS configuration information corresponding to the subframe set A may be used to indicate an MCS table A, such as the second MCS table described above; the MCS configuration information corresponding to the subframe set B may be used to indicate an MCS table B, such as the first MCS table described above; the MCS configuration information corresponding to the subframe not in the two subframe sets may be used to indicate the MCS table B or that the MCS candidate set corresponding to the subframe not in the two subframe sets is the MCS table B, such as the first MCS table described above. Compared with the MCS table B, the MCS table A includes a modulation scheme whose modulation order is higher than 64QAM, for example, 256QAM.

The UE separately determines, according to the MCS configuration information notified by the base station, MCS tables corresponding to the two subframe sets, and separately receives, according to the two MCS tables, data transmitted in subframes in the two subframe sets; the UE determines, according to the MCS configuration information or the MCS candidate set that is notified by the base station to the UE or predefined and that is corresponding to the subframe not in the two subframe sets, an MCS table corresponding to the subframe not in the two subframe sets, and receives, according to the MCS table, data transmitted in the subframe not in the two subframe sets. Specifically, if the data transmission subframe belongs to the subframe set A, the UE determines a modulation and coding scheme for data according to the MCS table A, and then receives the data; if the data transmission subframe belongs to the subframe set B or does not belong to the subframe set A or B, the UE determines a modulation and coding scheme for data according to the MCS table B, and then receives the data.

A beneficial effect of this example is as follows: Because in subframes in different subframe sets, distinctly different interference is caused to signals received by a UE, SINRs of the received signals are also distinctly different. Therefore, using different CQI configurations or using different MCS configurations can better adapt to different SINR intervals. Additionally, because a large SINR can use a CQI table and an MCS table that include 256QAM, system throughput can be increased substantially.

Example 2: A resource group refers to a resource block set.

A resource block refers to a resource unit in a subframe, and one subframe may include multiple resource blocks. Generally, two resource blocks may form one resource block pair, and multiple resource blocks may form one resource block group. In the present invention, both a resource block pair and a resource block group may be considered as a larger resource block, which is also applicable to the present invention. Herein, both a resource block pair and a resource block group are referred to as a resource block collectively.

A base station notifies a UE of at least two resource block sets, and the base station notifies the UE of CQI configuration information respectively corresponding to the at least two resource block sets, so that the UE separately obtains, according to the CQI configuration information, a CQI corresponding to a resource block in at least one resource block set of the at least two resource block sets, and the UE reports the CQI to the base station.

For example, the base station configures two resource block sets for the UE, where the two resource block sets are a resource block set A and a resource block set B respectively, and the base station notifies the UE of CQI configuration information corresponding to the resource block set A and CQI configuration information corresponding to the resource block set B. Specifically, the resource block set A includes a slightly interfered resource block, and the resource block set B includes a severely interfered resource block. Therefore, an SINR of a signal transmitted on a resource block included in the resource block set A is relatively large, and an SINR of a signal transmitted on a resource block included in the resource block set B is relatively small. In this case, the CQI configuration information corresponding to the resource block set A may be used to indicate a CQI table A, such as the second CQI table or the third CQI table described above, and the CQI configuration information corresponding to the resource block set B may be used to indicate a CQI table B, such as the first CQI table described above. Compared with the CQI table B, the CQI table A includes a modulation scheme whose modulation order is higher than 64QAM, for example, 256QAM.

The UE separately determines, according to the CQI configuration information notified by a base station side, CQI tables corresponding to the two resource block sets, and separately measures CQIs of resource blocks in the two resource block sets according to the two CQI tables. Specifically, if a resource block on which CQI measurement needs to be performed belongs to the resource block set A, the UE obtains the CQI according to the CQI table A; if a resource block on which CQI measurement needs to be performed belongs to the resource block set B, the UE obtains the CQI according to the CQI table B.

Further, the base station notifies the UE of MCS configuration information respectively corresponding to the at least two resource block sets, so that the UE receives data according to the MCS configuration information.

The foregoing example continues to be used. The base station notifies the UE of MCS configuration information corresponding to the resource block set A and MCS configuration information corresponding to the resource block set B. The MCS configuration information corresponding to the resource block set A may be used to indicate an MCS table A, such as the second MCS table described above, and the MCS configuration information corresponding to the resource block set B may be used to indicate an MCS table B, such as the first MCS table described above. Compared with the MCS table B, the MCS table A includes a modulation scheme whose modulation order is higher than 64QAM, for example, 256QAM.

The UE separately determines, according to the MCS configuration information notified by the base station side, MCS tables respectively corresponding to the two resource block sets, and separately receives, according to the two MCS tables, data transmitted on resource blocks in the two resource block sets.

Data transmitted on a resource group is received according to an MCS candidate set corresponding to the resource group to which a data transmission resource belongs. A specific example is as follows:

If a data transmission resource block belongs to the resource block set A, the UE determines a modulation and coding scheme for data according to the MCS table A, and then receives the data;

if a data transmission resource block belongs to the resource block set B, the UE determines a modulation and coding scheme for data according to the MCS table B, and then receives the data.

Alternatively, an MCS candidate set corresponding to a resource group is selected according to a preset rule, to receive data. Specifically, for example, the following two manners may be used.

Manner 1: An MCS candidate set corresponding to a resource group to which a data transmission resource belongs is selected according to a preset rule, to receive data. For example, if a resource block whose serial number is the smallest in a data transmission resource block belongs to the resource block set A, the UE determines a modulation and coding scheme for data according to the MCS table A, and then receives the data. If a resource block whose serial number is the smallest in a data transmission resource block belongs to the subframe set B, the UE determines a modulation and coding scheme for data according to the MCS table B, and then receives the data. It should be noted that, the resource block whose serial number is the smallest in the data transmission resource block may also be another predefined resource block, for example, a resource block whose serial number is largest in the data transmission resource block.

Manner 2: Data is received according to an MCS candidate set corresponding to a resource group including most data transmission resources. For example, if a quantity of resource blocks that belong to the resource block set A and are in data transmission resource blocks is greater than a quantity of resource blocks that belong to the resource block set B and are in the data transmission resource blocks, the UE determines a modulation and coding scheme for data according to the MCS table A, and then receives the data. If a quantity of resource blocks that belong to the resource block set B and are in data transmission resource blocks is greater than a quantity of resource blocks that belong to the resource block set A and are in the data transmission resource blocks, the UE determines a modulation and coding scheme for data according to the MCS table B, and then receives the data. If a quantity of resource blocks that belong to the resource block set B and are in data transmission resource blocks is equal to a quantity of resource blocks that belong to the resource block set A and are in the data transmission resource blocks, the UE determines a modulation and coding scheme for data according to a predefined MCS table A or a predefined MCS table B, and then receives the data. A beneficial effect of this example is as follows: Because on resource blocks in different resource block sets, distinctly different interference is caused to signals received by a UE, SINRs of the received signals are also distinctly different. Therefore, using different CQI configurations or using different CQI and MCS configurations can better adapt to different SINR intervals. Additionally, because a large SINR can use a CQI table and an MCS table that include 256QAM, system throughput can be increased substantially.

Example 3: A resource group refers to a carrier or a carrier set.

There may be multiple carriers in a communications system (for example, an LTE system). A resource group refers to a carrier in this example, and similarly, this example may be extended to a case in which a resource group refers to a carrier set.

A base station notifies a UE of at least two carriers, and the base station notifies the UE of CQI configuration information respectively corresponding to the at least two carriers, so that the UE separately obtains, according to the CQI configuration information, a CQI corresponding to at least one carrier of the at least two carriers, and the UE reports the CQI to the base station.

For example, the base station configures two carriers for the UE, where the two carriers are a carrier A and a carrier B respectively, and the base station notifies the UE of CQI configuration information corresponding to the carrier A and CQI configuration information corresponding to the carrier B. Specifically, the carrier A is a slightly interfered carrier, for example, a carrier of a neighboring cell is a new type of carrier (the new type of carrier has few cell-specific reference signals (cell specific reference signal, CRS) or has no CRS, and therefore little interference is generated); the carrier B is a severely interfered carrier. Therefore, an SINR of a signal transmitted on the carrier A is relatively large, and an SINR of a signal transmitted on the carrier B is relatively small. In this case, the CQI configuration information corresponding to the carrier A may be used to indicate a CQI table A, such as the second CQI table or the third CQI table described above, and the CQI configuration information corresponding to the carrier B may be used to indicate a CQI table B, such as the first CQI table described above. Compared with the CQI table B, the CQI table A includes a modulation scheme whose modulation order is higher than 64QAM, for example, 256QAM.

The UE separately determines, according to the CQI configuration information notified by the base station, CQI tables corresponding to the two carriers, and separately measures CQIs of the two carriers according to the two CQI tables. Specifically, if a carrier on which CQI measurement needs to be performed is the carrier A, the UE obtains the CQI according to the CQI table A; if a carrier on which CQI measurement needs to be performed is the carrier B, the UE obtains the CQI according to the CQI table B.

Further, the base station notifies the UE of MCS configuration information respectively corresponding to the at least two carriers, so that the UE receives data according to the MCS configuration information.

The foregoing example continues to be used. The base station notifies the UE of MCS configuration information corresponding to the carrier A and MCS configuration information corresponding to the carrier B. The MCS configuration information corresponding to the carrier A may be used to indicate an MCS table A, such as the second MCS table described above, and the MCS configuration information corresponding to the carrier B may be used to indicate an MCS table B, such as the first MCS table described above. Compared with the MCS table B, the MCS table A includes a modulation scheme whose modulation order is higher than 64QAM, for example, 256QAM.

The UE separately determines, according to the MCS configuration information notified by the base station, MCS tables corresponding to the two carriers, and separately receives, according to the two MCS tables, data transmitted in subframes in the two carriers. Specifically, if a data transmission carrier is the carrier A, the UE determines a modulation and coding scheme for data according to the MCS table A, and then receives the data; if a data transmission carrier is the carrier B, the UE determines a modulation and coding scheme for data according to the MCS table B, and then receives the data.

A beneficial effect of this example is as follows: Because on different carriers, distinctly different interference is caused to signals received by a UE, SINRs of the received signals are also distinctly different. Therefore, using different CQI configurations or using different CQI and MCS configurations can better adapt to different SINR intervals. Additionally, because a large SINR can use a CQI table and an MCS table that include 256QAM, system throughput can be increased substantially.

Example 4: A resource group refers to a CSI process or a CSI process set.

There may be multiple CSI processes in a communications system (for example, an LTE system). A resource group refers to a CSI process in this example, and similarly, this example may be extended to a case in which a resource group refers to a CSI process set.

A base station notifies a UE of at least two CSI processes, and the base station notifies the UE of CQI configuration information respectively corresponding to the at least two CSI processes, so that the UE separately obtains, according to the CQI configuration information, a CQI corresponding to at least one CSI process of the at least two CSI processes, and the UE reports the CQI to the base station.

For example, the base station configures two CSI processes for the UE, where the two CSI processes are a CSI process A and a CSI process B respectively, and the base station notifies the UE of CQI configuration information corresponding to the CSI process A and CQI configuration information corresponding to the CSI process B. Specifically, little interference is obtained by performing measurement on a CSI-IM included in the CSI process A. For example, it is assumed that neighboring cells are in a silent state, that is, it is assumed that no interference is generated between the neighboring cells. Much interference is obtained by performing measurement on a CSI-IM included in the CSI process B. For example, it is assumed that neighboring cells are in a data transmission state, that is, it is assumed that interference is generated between the neighboring cells. Therefore, an SINR obtained by measurement according to the CSI process A is relatively large, and an SINR obtained by measurement according to the CSI process B is relatively small. In this case, the CQI configuration information corresponding to the CSI process A may be used to indicate a CQI table A, such as the second CQI table or the third CQI table described above, and the CQI configuration information corresponding to the CSI process B may be used to indicate a CQI table B, such as the first CQI table described above. Compared with the CQI table B, the CQI table A includes a modulation scheme whose modulation order is higher than 64QAM, for example, 256QAM.

The UE separately determines, according to the CQI configuration information notified by a base station side, CQI tables respectively corresponding to the two CSI processes, and separately measures CQIs of the two CSI processes according to the two CQI tables. Specifically, if a CSI process on which CQI measurement needs to be performed is the CSI process A, the UE obtains the CQI according to the CQI table A; if a CSI process on which CQI measurement needs to be performed is the CSI process B, the UE obtains the CQI according to the CQI table B.

Further, the base station notifies the UE of MCS configuration information respectively corresponding to the at least two CSI processes, so that the UE receives data according to the MCS configuration information.

The foregoing example continues to be used. The base station notifies the UE of MCS configuration information corresponding to the CSI process A and MCS configuration information corresponding to the CSI process B. The MCS configuration information corresponding to the CSI process A may be used to indicate an MCS table A, such as the second MCS table described above, and the MCS configuration information corresponding to the CSI process B may be used to indicate an MCS table B, such as the first MCS table described above. Compared with the MCS table B, the MCS table A includes a modulation scheme whose modulation order is higher than 64QAM, for example, 256QAM.

The UE separately determines, according to the MCS configuration information notified by the base station side, MCS tables respectively corresponding to the two CSI processes, and receives data according to these MCS tables and dynamic signaling sent by the base station. Specifically, the base station indicates, by using the dynamic signaling, a CSI process corresponding to data transmission. If the CSI process corresponding to the data transmission is the CSI process A, the UE determines a modulation and coding scheme for data according to the MCS table A, and then receives the data; if the CSI process corresponding to the data transmission is the CSI process B, the UE determines a modulation and coding scheme for data according to the MCS table B, and then receives the data.

Alternatively, the base station indicates, by using the dynamic signaling, MCS configuration information corresponding to data transmission, so that the UE determines a corresponding MCS table according to the MCS configuration information to receive data, that is, the base station does not need to notify the UE of at least two resource groups and MCS configuration information corresponding to each of the resource groups in advance, and the UE does not need to determine a resource group to which a data transmission resource belongs either. A beneficial effect of this example is as follows: Because interference obtained by measurement by a UE varies distinctly according to different CSI processes, SINRs obtained by measurement also vary distinctly. Therefore, using different CQI configurations or using different CQI and MCS configurations can better adapt to different SINR intervals. Additionally, because a large SINR can use a CQI table and an MCS table that include 256QAM, system throughput can be increased substantially.

In the LTE system, the foregoing dynamic signaling may be reusing existing signaling "PDSCH RE Mapping and Quasi-Co-Location indicator" (PDSCH RE Mapping and Quasi-Co-Location indicator, PQI for short). Specifically, the base station notifies the UE of the MCS configuration information respectively corresponding to the at least two CSI processes, and sends the PDSCH RE Mapping and Quasi-Co-Location indicator (PQI for short) to the UE, so that the UE receives data according to the MCS configuration information and the PQI. For example, the UE determines a CSI-RS according to the PQI; the UE determines that a CSI process including the CSI-RS is a CSI process corresponding to the data transmission, and receives data according to an MCS table corresponding to the CSI process.

Further, if there are two or more CSI processes including the CSI-RS, the UE selects, according to a predefined rule, one CSI process including the CSI-RS from the CSI processes including the CSI-RS, and receives data according to an MCS table corresponding to the CSI process. Specifically, the predefined rule may be any one of the following: A serial number of MCS configuration information corresponding to the selected CSI process is the largest or the smallest in serial numbers of MCS configuration information corresponding to the two or more CSI processes including the CSI-RS; a serial number of the selected CSI process is the largest or the smallest in serial numbers of the two or more CSI processes including the CSI-RS; a serial number of a CSI-IM included in the selected CSI process is the largest or the smallest in serial numbers of CSI-IMs included in the two or more CSI processes including the CSI-RS; an MCS table indicated by MCS configuration information corresponding to the selected CSI process includes a modulation scheme whose modulation order is higher than 64QAM or does not include a modulation scheme whose modulation order is higher than 64QAM.

Preferably, that the base station notifies the UE of MCS configuration information respectively corresponding to the at least two CSI processes further includes that: CSI processes including a same CSI-RS are corresponding to same MCS configuration information.

Preferably, that the base station notifies the UE of CQI configuration information respectively corresponding to the at least two CSI processes further includes that: CSI processes including a same CSI-RS are corresponding to same CQI configuration information.

Preferably, that the base station notifies the UE of CSI configuration information respectively corresponding to the at least two CSI processes further includes that: CSI processes including a same CSI-RS are corresponding to same CSI configuration information.

The beneficial effect of this example further includes the following: By reusing existing dynamic signaling, extra dynamic signaling overheads are avoided. Example 5: A resource group refers to a CSI-RS or a CSI-RS set.

There may be multiple CSI-RSs in a communications system (for example, an LTE system). A resource group refers to a CSI-RS in this example, and similarly, this example may be extended to a case in which a resource group refers to a CSI-RS set.

A base station notifies a UE of at least two CSI-RSs, and the base station notifies the UE of CQI configuration information respectively corresponding to the at least two CSI-RSs, so that the UE separately obtains, according to the CQI configuration information, a CQI corresponding to at least one CSI-RS of the at least two CSI-RSs, and the UE reports the CQI to the base station. For example, the base station configures two CSI-RSs for the UE, where the two CSI-RSs are a CSI-RS A and a CSI-RS B respectively, and the base station notifies the UE of CQI configuration information corresponding to the CSI-RS A and CQI configuration information corresponding to the CSI-RS B. Specifically, little interference is obtained by performing measurement on a CSI-IM included in the CSI-RS A. For example, it is assumed that neighboring cells are in a silent state, that is, it is assumed that no interference is generated between the neighboring cells. Much interference is obtained by performing measurement on a CSI-IM included in the CSI-RS B. For example, it is assumed that neighboring cells are in a data transmission state, that is, it is assumed that interference is generated between the neighboring cells. Therefore, an SINR obtained by measurement according to the CSI-RS A is relatively large, and an SINR obtained by measurement according to the CSI-RS B is relatively small. In this case, the CQI configuration information corresponding to the CSI-RS A may be used to indicate a CQI table A, such as the second CQI table or the third CQI table described above, and the CQI configuration information corresponding to the CSI-RS B may be used to indicate a CQI table B, such as the first CQI table described above. Compared with the CQI table B, the CQI table A includes a modulation scheme whose modulation order is higher than 64QAM, for example, 256QAM.

The UE separately determines, according to the CQI configuration information notified by a base station side, CQI tables respectively corresponding to the two CSI-RSs, and separately measures CQIs of the two CSI-RSs according to the two CQI tables. Specifically, if a CSI-RS on which CQI measurement needs to be performed is the CSI-RS A, the UE obtains the CQI according to the CQI table A; if a CSI-RS on which CQI measurement needs to be performed is the CSI-RS B, the UE obtains the CQI according to the CQI table B.

Further, the base station notifies the UE of MCS configuration information respectively corresponding to the at least two CSI-RSs, so that the UE receives data according to the MCS configuration information.

The foregoing example continues to be used. The base station notifies the UE of MCS configuration information corresponding to the CSI-RS A and MCS configuration information corresponding to the CSI-RS B. The MCS configuration information corresponding to the CSI-RS A may be used to indicate an MCS table A, such as the second MCS table described above, and the MCS configuration information corresponding to the CSI-RS B may be used to indicate an MCS table B, such as the first MCS table described above. Compared with the MCS table B, the MCS table A includes a modulation scheme whose modulation order is higher than 64QAM, for example, 256QAM.

The UE separately determines, according to the MCS configuration information notified by the base station side, MCS tables respectively corresponding to the two CSI-RSs, and receives data according to these MCS tables and dynamic signaling sent by the base station. Specifically, the base station indicates, by using the dynamic signaling, a CSI-RS corresponding to data transmission. If the CSI-RS corresponding to the data transmission is the CSI-RS A, the UE determines a modulation and coding scheme for data according to the MCS table A, and then receives the data; if the CSI-RS corresponding to the data transmission is the CSI-RS B, the UE determines a data modulation and coding scheme for data according to the MCS table B, and then receives the data.

Alternatively, the base station indicates, by using the dynamic signaling, MCS configuration information corresponding to data transmission, so that the UE determines a corresponding MCS table according to the MCS configuration information, to receive data, and the UE does not need to determine a CSI-RS category.

In the LTE system, the foregoing dynamic signaling may be reusing existing signaling "PDSCH RE Mapping and Quasi-Co-Location indicator" (PDSCH RE Mapping and Quasi-Co-Location indicator).

A beneficial effect of this example is as follows: Downlink channels of different access points are obtained by performing measurement based on different CSI-RSs, and signal-to-noise ratios of data sent by different access points are distinctly different. Therefore, system throughput can be increased by using different CQI and MCS tables.

Example 6: A resource group refers to an access point or an access point set.

An access point set is used as an example. A base station notifies a UE of at least two access point sets, and the base station notifies the UE of CQI configuration information respectively corresponding to the at least two access point sets, so that the UE separately obtains, according to the CQI configuration information, a CQI corresponding to each access point in at least one access point set of the at least two access point sets, and the UE reports the CQI to the base station.

For example, the base station configures two access point sets for the UE, where the two access point sets are an access point set A and an access point set B respectively, and the base station notifies the UE of CQI configuration information corresponding to the access point set A and CQI configuration information corresponding to the access point set B. Specifically, the access point set A includes a slightly interfered access point, and the access point set B includes a severely interfered access point. Therefore, an SINR of a signal transmitted on an access point included in the access point set A is relatively large, and an SINR of a signal transmitted on an access point included in the access point set B is relatively small. In this case, the CQI configuration information corresponding to the access point set A may be used to indicate a CQI table A, such as the second CQI table or the third CQI table described above, and the CQI configuration information corresponding to the access point set B may be used to indicate a CQI table B, such as the first CQI table described above. Compared with the CQI table B, the CQI table A includes a modulation scheme whose modulation order is higher than 64QAM, for example, 256QAM.

The UE separately determines, according to the CQI configuration information notified by the base station, CQI tables corresponding to the two access point sets, and separately measures CQIs of access points in the two access point sets according to the two CQI tables. Specifically, if a CQI measurement reference access point belongs to the access point set A, the UE obtains the CQI according to the CQI table A; if a CQI measurement reference access point belongs to the access point set B, the UE obtains the CQI according to the CQI table B.

Further, the base station notifies the UE of MCS configuration information respectively corresponding to the at least two access point sets, so that the UE receives data according to the MCS configuration information.

The foregoing example continues to be used. The base station notifies the UE of MCS configuration information corresponding to the access point set A and MCS configuration information corresponding to the access point set B. The MCS configuration information corresponding to the access point set A may be used to indicate an MCS table A, such as the second MCS table described above, and the MCS configuration information corresponding to the access point set B may be used to indicate an MCS table B, such as the first MCS table described above. Compared with the MCS table B, the MCS table A includes a modulation scheme whose modulation order is higher than 64QAM, for example, 256QAM.

The UE separately determines, according to the MCS configuration information notified by the base station, MCS tables corresponding to the two access point sets, and separately receives, according to the two MCS tables, data transmitted on access points in the two access point sets. Specifically, if a data transmission access point belongs to the access point set A, the UE determines a modulation and coding scheme for data according to the MCS table A, and then receives the data; if a data transmission access point belongs to the access point set B, the UE determines a modulation and coding scheme for data according to the MCS table B, and then receives the data.

A beneficial effect of this example is as follows: Signal-to-noise ratios of data sent by different access points are distinctly different, and therefore, system throughput can be increased by using different CQI and MCS tables.

Example 7: A resource group is a combination of at least two of the following: a subframe, a subframe set, a resource block, a resource block set, a carrier, a carrier set, a CSI process, a CSI process set, a CSI-RS, a CSI-RS set, an access point, and an access point set.

For example, the resource group is a combination of a subframe set and a CSI process. A base station notifies a UE of at least two subframe sets and/or at least two CSI processes, and the base station notifies the UE of CQI configuration information respectively corresponding to at least two combinations of the subframe sets and the CSI processes, so that the UE separately obtains, according to the CQI configuration information, CQIs respectively corresponding to the at least two combinations of the subframe sets and the CSI processes, and the UE reports the CQIs to the base station.

For another example, the resource group is a combination of a subframe set, a carrier, and a CSI process. The base station notifies the UE of at least two subframe sets, at least two carriers, and/or at least two CSI processes, and the base station notifies the UE of CQI configuration information respectively corresponding to at least two combinations of the subframe sets, the carriers, and the CSI processes, so that the UE separately obtains, according to the CQI configuration information, CQIs respectively corresponding to the at least two combinations of the subframe sets, the carriers, and the CSI processes, and the UE reports the CQIs to the base station.

A beneficial effect of this example is as follows: Signal-to-noise ratios of data sent by different access points are distinctly different, and therefore, system throughput can be increased by using different CQI and MCS tables.

The beneficial effect of this example is as follows: The beneficial effects of the examples 1 to 6 can be achieved.

Example 8: A resource group is a combination of at least two of the following: a subframe, a subframe set, a resource block, a resource block set, a carrier, a carrier set, a CSI process, a CSI process set, a CSI-RS, a CSI-RS set, an access point, and an access point set.

For example, the resource group is a combination of a subframe set and a CSI process. A base station notifies a UE of at least two subframe sets and at least two CSI processes, and the base station notifies the UE of CQI configuration information respectively corresponding to the at least two subframe sets and CQI configuration information respectively corresponding to the at least two CSI processes, so that the UE separately obtains, according to the CQI configuration information, CQIs respectively corresponding to at least two combinations of the subframe sets and the CSI processes, and the UE reports the CQIs to the base station.

For another example, the resource group is a combination of a CSI process and a carrier. The base station notifies the UE of at least two CSI processes and at least two carriers, and the base station notifies the UE of CQI configuration information respectively corresponding to the at least two CSI processes and CQI configuration information respectively corresponding to the at least two carriers, so that the UE separately obtains, according to the CQI configuration information, CQIs respectively corresponding to at least two combinations of the CSI processes and the carriers, and the UE reports the CQIs to the base station.

For another example, the resource group is a combination of a subframe set and a carrier. The base station notifies the UE of at least two subframe sets and at least two carriers, and the base station notifies the UE of CQI configuration information respectively corresponding to the at least two subframe sets and CQI configuration information respectively corresponding to the at least two carriers, so that the UE separately obtains, according to the CQI configuration information, CQIs respectively corresponding to at least two combinations of the subframe sets and the carriers, and the UE reports the CQIs to the base station.

For another example, the resource group is a combination of a subframe set, a carrier, and a CSI process. The base station notifies the UE of at least two subframe sets, at least two carriers, and at least two CSI processes, and the base station notifies the UE of CQI configuration information respectively corresponding to the at least two subframe sets, CQI configuration information respectively corresponding to the at least two carriers, and CQI configuration information respectively corresponding to the at least two CSI processes, so that the UE separately obtains, according to the CQI configuration information, CQIs respectively corresponding to at least two combinations of the subframe sets, the carriers, and the CSI processes, and the UE reports the CQIs to the base station.

Further, the UE obtains, according to a predefined rule, a CQI corresponding to the foregoing combination. For example, the combination includes a subframe set and a CSI process. The UE selects one from CQI configuration information that is notified by the base station and that is corresponding to the subframe set and configuration information that is notified by the base station and that is corresponding to the CSI process, and determines the CQI according to the configuration information, where a CQI table indicated by the configuration information includes a modulation scheme whose modulation order is higher than 64QAM or does not include a modulation scheme whose modulation order is higher than 64QAM.

For another example, the combination includes a CSI process and a carrier. The UE selects one from CQI configuration information that is notified by the base station and that is corresponding to the CSI process and CQI configuration information that is notified by the base station and that is corresponding to the carrier, and determines the CQI according to the configuration information, where a CQI table indicated by the configuration information includes a modulation scheme whose modulation order is higher than 64QAM or does not include a modulation scheme whose modulation order is higher than 64QAM.

For another example, the combination includes a subframe set and a carrier. The UE selects one from CQI configuration information that is notified by the base station and that is corresponding to the subframe set and CQI configuration information that is notified by the base station and that is corresponding to the carrier, and determines the CQI according to the configuration information, where a CQI table indicated by the configuration information includes a modulation scheme whose modulation order is higher than 64QAM or does not include a modulation scheme whose modulation order is higher than 64QAM.

For another example, the combination includes a subframe set, a carrier, and a CSI process. The UE selects one from CQI configuration information that is notified by the base station and that is corresponding to the subframe set, CQI configuration information that is notified by the base station and that is corresponding to the carrier, and CQI configuration information that is notified by the base station and that is corresponding to the CSI process, and determines the CQI according to the configuration information, where a CQI table indicated by the configuration information includes a modulation scheme whose modulation order is higher than 64QAM or does not include a modulation scheme whose modulation order is higher than 64QAM.

The following introduces a second implementation manner provided in an embodiment of the present invention.

CQI configuration information respectively corresponding to a physical uplink shared channel (Physical Uplink Shared Channel, PUSCH) reporting mode and a physical uplink control channel (Physical Uplink Control Channel, PUCCH) reporting mode is notified by a base station to a UE or predefined by a UE, so that the UE separately determines corresponding CQI candidate sets according to different CQI configuration information, separately obtains, by using the corresponding CQI candidate set, a CQI that needs to be reported based on the PUSCH reporting mode and/or a CQI that needs to be reported based on the PUCCH reporting mode, and reports a corresponding CQI to the base station. The CQI candidate sets separately determined according to the different CQI configuration information may be the same or may be different; the UE uses a PUSCH to report a CQI that is based on the PUSCH reporting mode, and the UE may use a PUCCH or a PUSCH to report a CQI that is based on the PUCCH reporting mode. Further, the PUSCH reporting mode may also be referred to as an "aperiodic reporting mode", and the PUCCH reporting mode may also be referred to as a "periodic reporting mode". Therefore, this embodiment may also be described as follows: CQI configuration information respectively corresponding to an aperiodic reporting mode and a periodic reporting mode is notified by a base station to a UE or predefined by a UE, so that the UE separately determines corresponding CQI candidate sets according to different CQI configuration information, separately obtains, by using the corresponding CQI candidate set, a CQI that needs to be reported in the aperiodic reporting mode and/or a CQI that needs to be reported in the periodic reporting mode, and reports a corresponding CQI to the base station. The CQI candidate sets separately determined according to the different CQI configuration information may be the same or may be different; the UE uses a PUSCH to report a CQI of the aperiodic reporting mode, and the UE may use a PUCCH or a PUSCH to report a CQI of the periodic reporting mode.

Specifically, it is assumed that CQIs of at least two resource groups that are reported based on the PUSCH reporting mode use a CQI table A, and CQIs of the at least two resource groups that are reported based on the PUCCH reporting mode use a CQI table B. Compared with the CQI table B, the CQI table A includes a modulation scheme of a higher modulation order (256QAM); in addition, the CQI table A supports a wider range of signal-to-noise ratios, and the CQI table A includes more entries. For example, the CQI table A may be the second CQI table described above. The CQI table B, for example, may be the first CQI table described above. Specifically, the CQI table A may have 32 entries, and the CQI table B may have 16 entries. That is, each CQI reported based on the PUSCH has a maximum of five bits, and each CQI reported based on the PUCCH has a maximum of four bits.

A beneficial effect of this implementation manner is as follows: A quantity of bits of information carried on a PUCCH is relatively small and is limited strictly, and a 4-bit CQI table is used to perform CQI reporting, which does not change the quantity of bits of the information carried on the PUCCH and has little impact on a system. A quantity of bits of information carried on a PUSCH is relatively large, and a 5-bit CQI table is used to perform CQI reporting, which can improve precision of the CQI reporting and helps to increase system throughput.

It should be noted that, the foregoing two implementation manners may be combined to obtain a third implementation manner provided in an embodiment of the present invention.

That is, CSI configuration information separately corresponding to a case in which CQIs of at least two resource groups are reported based on a PUSCH and CSI configuration information corresponding to a case in which CQIs of the at least two resource groups are reported based on a PUCCH reporting mode are notified by a base station to a UE or predefined by a UE, so that the UE separately obtains, according to the CSI configuration information notified by the base station, the CQIs of the at least two resource groups that are reported based on the PUSCH reporting mode and the CQIs of the at least two resource groups that are reported based on the PUCCH reporting mode, the UE reports the corresponding CQIs to the base station respectively based on a PUSCH and based on a PUCCH, where the CQIs are corresponding to different resource groups.

Specifically, it is assumed that a CQI of a resource group A that is reported based on the PUSCH uses a CQI table A, and it is assumed that a CQI of a resource group B that is reported based on the PUSCH uses a CQI table B and the CQIs of the at least two resource groups that are reported based on the PUCCH reporting mode also use the CQI table B. Compared with the CQI table B, the CQI table A includes a modulation scheme of a higher modulation order (256QAM); in addition, the CQI table A supports a wider range of signal-to-noise ratios, and the CQI table A includes more entries. For example, the CQI table A may be the second CQI table described above. The CQI table B, for example, may be the first CQI table described above. Specifically, the CQI table A may have 32 entries, and the CQI table B may have 16 entries. That is, each CQI reported based on the PUSCH has a maximum of five bits, and each CQI reported based on the PUSCH has a maximum of four bits.

In conclusion, in the embodiments of the present invention, four information notification methods are provided by a base station side, and accordingly, three information reporting methods and one data receiving method are provided on a UE side. In addition, it should be noted that, in descriptions of all the foregoing examples, CSI configuration information is CQI configuration information, a CSI candidate set is a CQI candidate set, and the CQI candidate set includes a preset CQI table or a set consisting of a candidate entry in a preset CQI table. Likewise, it is also applicable to a case in which the CSI configuration information is PMI configuration information or RI configuration information, the CSI candidate set is a PMI candidate set or an RI candidate set, and the PMI candidate set includes a preset PMI table or a set consisting of a candidate entry in a preset PMI table, or the RI candidate set includes a preset RI table or a set consisting of a candidate entry in a preset RI table.

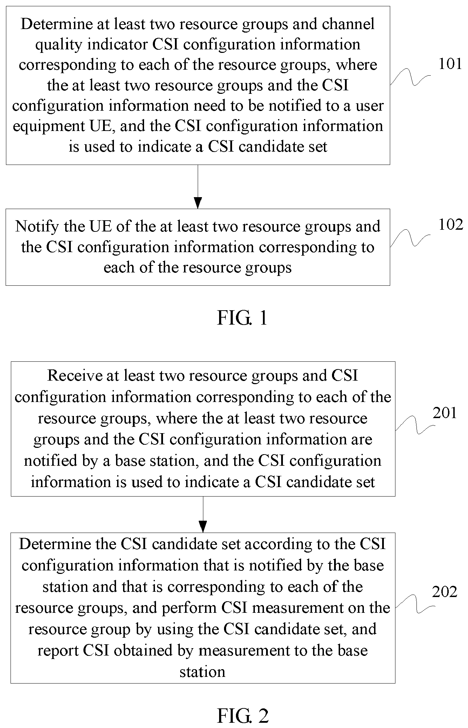

Referring to FIG. 1, an embodiment of the present invention provides a first information notification method, where the method includes the following steps:

101. Determine at least two resource groups and channel quality indicator CSI configuration information corresponding to each of the resource groups, where the at least two resource groups and the CSI configuration information need to be notified to a user equipment UE, and the CSI configuration information is used to indicate a CSI candidate set.

102. Notify the UE of the at least two resource groups and the CSI configuration information corresponding to each of the resource groups.

The CSI includes: channel quality indicator information CQI, and/or a precoding matrix indication PMI, and/or a rank indication RI.

The CSI candidate set includes a preset CSI table or a set consisting of a candidate entry in a preset CSI table.

The CSI configuration information is bitmap signaling, and the set consisting of a candidate entry in the preset CSI table is represented by using the bitmap signaling.

The CSI table is a CQI table, a PMI table, or an RI table.

Each of the resource groups includes one of the following resources:

a subframe, a subframe set, a resource block, a resource block set, a carrier, a carrier set, a channel state information CSI process, a CSI process set, a channel state information-reference signal CSI-RS, a CSI-RS set, an access point, and an access point set. Accordingly, referring to FIG. 2, an embodiment of the present invention provides an information reporting method, where the method includes the following steps:

201. Receive at least two resource groups and CSI configuration information corresponding to each of the resource groups, where the at least two resource groups and the CSI configuration information are notified by a base station, and the CSI configuration information is used to indicate a CSI candidate set.

202. Determine the CSI candidate set according to the CSI configuration information that is notified by the base station and that is corresponding to each of the resource groups, perform CSI measurement on the resource group by using the CSI candidate set, and report CSI obtained by measurement to the base station.

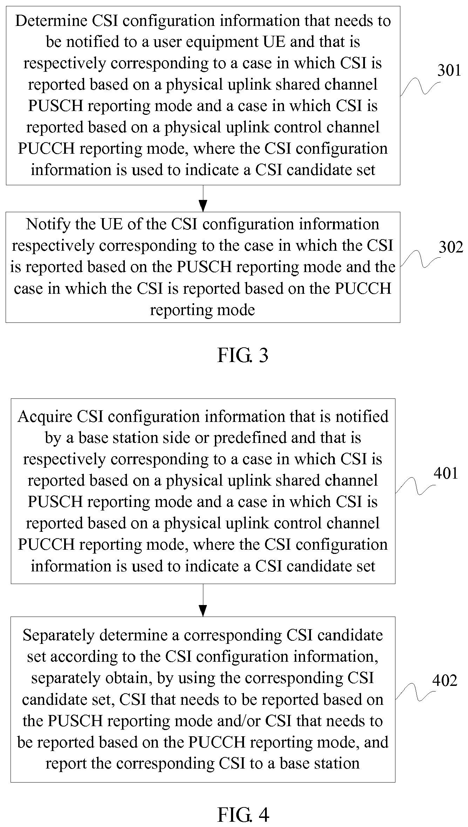

Referring to FIG. 3, an embodiment of the present invention provides a second information notification method, where the method includes the following steps:

301. Determine CSI configuration information that needs to be notified to a user equipment UE and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set.

302. Notify the UE of the CSI configuration information respectively corresponding to the case in which the CSI is reported based on the PUSCH reporting mode and the case in which the CSI is reported based on the PUCCH reporting mode.

Accordingly, referring to FIG. 4, an embodiment of the present invention provides an information reporting method, where the method includes the following steps:

401. Acquire CSI configuration information that is notified by a base station side or predefined and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set.

402. Separately determine a corresponding CSI candidate set according to the CSI configuration information, separately obtain, by using the corresponding CSI candidate set, CSI that needs to be reported based on the PUSCH reporting mode and/or CSI that needs to be reported based on the PUCCH reporting mode, and report the corresponding CSI to a base station.

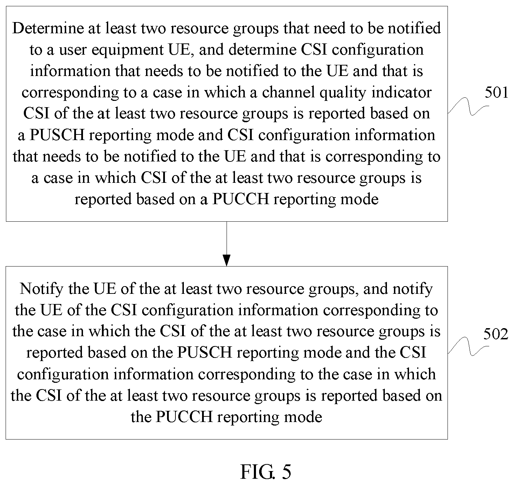

Referring to FIG. 5, an embodiment of the present invention provides a third information notification method, where the method includes the following steps:

501. Determine at least two resource groups that need to be notified to a user equipment UE, and determine CSI configuration information that needs to be notified to the UE and that is corresponding to a case in which a channel quality indicator CSI of the at least two resource groups is reported based on a PUSCH reporting mode and CSI configuration information that needs to be notified to the UE and that is corresponding to a case in which CSI of the at least two resource groups is reported based on a PUCCH reporting mode.

502. Notify the UE of the at least two resource groups, and notify the UE of the CSI configuration information corresponding to the case in which the CSI of the at least two resource groups is reported based on the PUSCH reporting mode and the CSI configuration information corresponding to the case in which the CSI of the at least two resource groups is reported based on the PUCCH reporting mode.

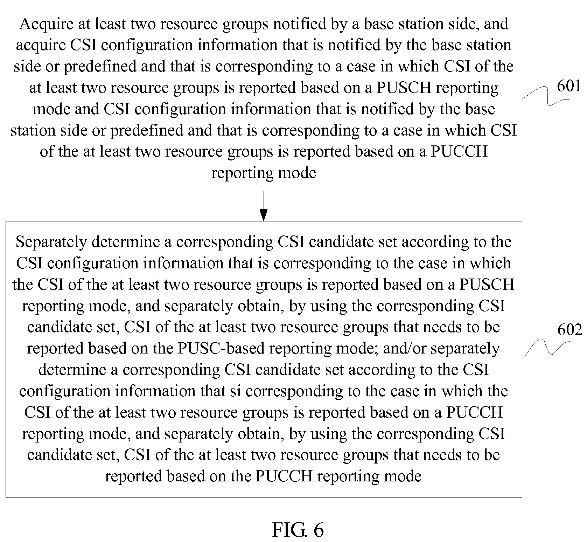

Accordingly, referring to FIG. 6, an embodiment of the present invention provides an information reporting method, where the method includes the following steps:

601. Acquire at least two resource groups notified by a base station side, and acquire CSI configuration information that is notified by the base station side or predefined and that is corresponding to a case in which CSI of the at least two resource groups is reported based on a PUSCH reporting mode and CSI configuration information that is notified by the base station side or predefined and that is corresponding to a case in which CSI of the at least two resource groups is reported based on a PUCCH reporting mode.

602. Separately determine a corresponding CSI candidate set according to the CSI configuration information that is corresponding to the case in which the CSI of the at least two resource groups is reported based on the PUSCH reporting mode, and separately obtain, by using the corresponding CSI candidate set, CSI of the at least two resource groups that needs to be reported based on the PUSCH reporting mode; and/or separately determine a corresponding CSI candidate set according to the CSI configuration information that is corresponding to the case in which the CSI of the at least two resource groups is reported based on the PUCCH reporting mode, and separately obtain, by using the corresponding CSI candidate set, CSI of the at least two resource groups that needs to be reported based on the PUCCH reporting mode.

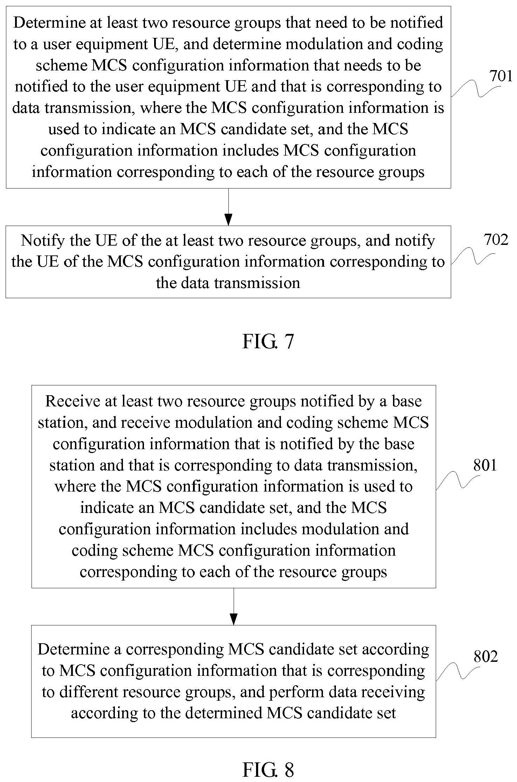

Referring to FIG. 7, an embodiment of the present invention provides a fourth information notification method, where the method includes the following steps:

701. Determine at least two resource groups that need to be notified to a user equipment UE, and determine modulation and coding scheme MCS configuration information that needs to be notified to the user equipment UE and that is corresponding to data transmission, where the MCS configuration information is used to indicate an MCS candidate set, and the MCS configuration information includes MCS configuration information corresponding to each of the resource groups.

702. Notify the UE of the at least two resource groups, and notify the UE of the MCS configuration information corresponding to the data transmission.

The fourth information notification method may be combined with the foregoing three information notification methods, that is, after notification of CSI configuration information is completed by using the first method, the second method, or the third method, the fourth information notification method may be further used to notify MCS configuration information. Accordingly, referring to FIG. 7, an embodiment of the present invention provides a data receiving method, where the method includes the following steps:

801. Receive at least two resource groups notified by a base station, and receive modulation and coding scheme MCS configuration information that is notified by the base station and that is corresponding to data transmission, where the MCS configuration information is used to indicate an MCS candidate set, and the MCS configuration information includes modulation and coding scheme MCS configuration information corresponding to each of the resource groups.

802. Determine a corresponding MCS candidate set according to MCS configuration information that is corresponding to different resource groups, and perform data receiving according to the determined MCS candidate set.

The performing data receiving according to the determined MCS candidate set includes:

receiving, according to an MCS candidate set corresponding to a resource group to which a data transmission resource belongs, data transmitted on the resource group;
or
selecting, according to a preset rule, an MCS candidate set corresponding to a resource group, to receive data;
or
selecting, according to a preset rule, an MCS candidate set corresponding to a resource group to which a data transmission resource belongs, to receive data;
or
receiving data according to an MCS candidate set corresponding to a resource group that includes most data transmission resources.

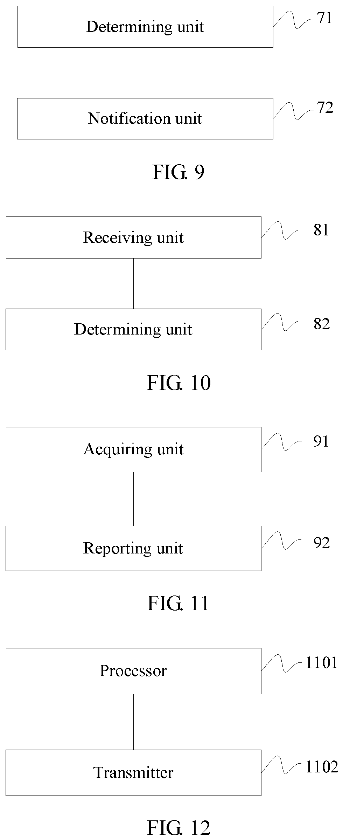

Referring to FIG. 9, an embodiment of the present invention provides a first information notification device, which is configured to implement at least one of the foregoing methods, and therefore, specific content of the foregoing methods is applicable to this embodiment. The device includes:

a determining unit 71, configured to determine at least two resource groups and channel state information CSI configuration information corresponding to each of the resource groups, where the at least two resource groups and the CSI configuration information need to be notified to a user equipment UE, and the CSI configuration information is used to indicate a CSI candidate set; and
a notification unit 72, configured to notify the UE of the at least two resource groups and the CSI configuration information corresponding to each of the resource groups.

Optionally, the determining unit 71 is further configured to determine CSI configuration information corresponding to a resource not in the at least two resource groups, where the CSI configuration information is used to indicate a CSI candidate set; and
the notification unit 72 is further configured to notify the UE of the CSI configuration information corresponding to the resource not in the at least two resource groups.

Optionally, each of the resource groups includes at least a CSI-RS and a CSI process; and
in the at least two resource groups, resource groups that include different CSI processes of a same CSI-RS are corresponding to same MCS configuration information.

Referring to FIG. 10, an embodiment of the present invention provides a first information reporting device, which is configured to implement at least one of the foregoing methods, and therefore, specific content of the foregoing methods is applicable to this embodiment. The device includes:

a receiving unit 81, configured to receive at least two resource groups and CSI configuration information corresponding to each of the resource groups, where the at least two resource groups and the CSI configuration information are notified by a base station, and the CSI configuration information is used to indicate a CSI candidate set; and
a determining unit 82, configured to: determine the CSI candidate set according to the CSI configuration information that is notified by the base station and that is corresponding to each of the resource groups, perform CSI measurement on the resource group by using the CSI candidate set, and report CSI obtained by measurement to the base station.

Optionally, the receiving unit is further configured to receive channel state information CSI configuration information that is notified by the base station and that is corresponding to a resource not in the at least two resource groups, where the CSI configuration information is used to indicate a CSI candidate set; and

the determining unit is further configured to: determine the CSI candidate set according to the CSI configuration information that is notified by the base station and that is corresponding to the resource not in the at least two resource groups, perform CSI measurement on the resource not in the at least two resource groups by using the CSI candidate set, and report CSI obtained by measurement to the base station;
or

the determining unit is further configured to: determine the CSI candidate set according to predefined CSI configuration information that is corresponding to a resource not in the at least two resource groups, perform CSI measurement on the resource not in the at least two resource groups by using the CSI candidate set, and report CSI obtained by measurement to the base station;

or

the determining unit is further configured to: perform CSI measurement on a resource not in the at least two resource groups according to a predefined CSI candidate set that is corresponding to the resource not in the at least two resource groups, and report CSI obtained by measurement to the base station.

Optionally, each of the resource groups includes at least a CSI-RS and a CSI process; and
in the at least two resource groups, resource groups that include different CSI processes of a same CSI-RS are corresponding to same CSI configuration information.
An embodiment of the present invention provides a second information notification device, where the device includes:

a determining unit, configured to determine CSI configuration information that needs to be notified to a user equipment UE and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set; and
a notification unit, configured to notify the UE of the CSI configuration information respectively corresponding to the case in which the CSI is reported based on the PUSCH reporting mode and the case in which the CSI is reported based on the PUCCH reporting mode. Preferably, the determining unit is further configured to: determine at least two resource groups that need to be notified to the user equipment UE, and notify the UE of the at least two resource groups;
that the determining unit determines the CSI configuration information that needs to be notified to the UE and that is respectively corresponding to the case in which the CSI is reported based on the PUSCH reporting mode and the case in which the CSI is reported based on the PUCCH reporting mode includes: determining CSI configuration information that needs to be notified to the UE and that is corresponding to a case in which CSI of the at least two resource groups is reported based on the PUSCH reporting mode and CSI configuration information that needs to be notified to the UE and that is corresponding to a case in which CSI of the at least two resource groups is reported based on the PUCCH reporting mode; and
that the notification unit notifies the UE of the CSI configuration information respectively corresponding to the case in which the CSI is reported based on the PUSCH reporting mode and the case in which the CSI is reported based on the PUCCH reporting mode includes: notifying the UE of the CSI configuration information corresponding to the case in which the CSI of the at least two resource groups is reported based on the PUSCH reporting mode and the CSI configuration information corresponding to the case in which the CSI of the at least two resource groups is reported based on the PUCCH reporting mode.

Referring to FIG. 11, an embodiment of the present invention provides a second information reporting device, where the device includes:

an acquiring unit 91, configured to acquire CSI configuration information that is notified by a base station side or predefined and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set; and
a reporting unit 92, configured to: separately determine a corresponding CSI candidate set according to the CSI configuration information, separately obtain, by using the corresponding CSI candidate set, CSI that needs to be reported based on the PUSCH reporting mode and/or CSI that needs to be reported based on the PUCCH reporting mode, and report the corresponding CSI to a base station.

Preferably, the acquiring unit 91 is further configured to acquire at least two resource groups notified by the base station side;

that the acquiring unit 91 acquires the CSI configuration information that is notified by the base station side or predefined and that is respectively corresponding to the case in which the CSI is reported based on the PUSCH reporting mode and the case in which the CSI is reported based on the PUCCH reporting mode includes: acquiring CSI configuration information that is notified by the base station side or predefined and that is corresponding to a case in which CSI of the at least two resource groups is reported based on the PUSCH reporting mode and CSI configuration information that is notified by the base station side or predefined and that is corresponding to a case in which CSI of the at least two resource groups is reported based on the PUCCH reporting mode; and

that the reporting unit 92 separately determines the corresponding CSI candidate set according to the CSI configuration information, and separately obtains, by using the corresponding CSI candidate set, the CSI that needs to be reported based on the PUSCH reporting mode and/or the CSI that needs to be reported based on the PUCCH reporting mode includes: separately determining the corresponding CSI candidate set according to the CSI configuration information that is corresponding to the case in which the CSI of the at least two resource groups is reported based on the PUSCH reporting mode, and separately obtaining, by using the corresponding CSI candidate set, CSI of the at least two resource groups that needs to be reported based on the PUSCH reporting mode; and/or separately determining the corresponding CSI candidate set according to the CSI configuration information that is corresponding to the case in which the CSI of the at least two resource groups is reported based on a PUCCH, and separately obtaining, by using the corresponding CSI candidate set, CSI of the at least two resource groups that needs to be reported based on the PUCCH reporting mode.

An embodiment of the present invention provides a third information notification device, where the device includes:

a determining unit, configured to: determine at least two resource groups that need to be notified to a user equipment UE, and determine modulation and coding scheme MCS configuration information that needs to be notified to the user equipment UE and that is corresponding to data transmission, where the MCS configuration information is used to indicate an MCS candidate set, and the MCS configuration information includes MCS configuration information corresponding to each of the resource groups; and

a notification unit, configured to: notify the UE of the at least two resource groups and notify the UE of the MCS configuration information corresponding to the data transmission. Optionally, the determining unit is further configured to determine MCS configuration information corresponding to a resource not in the at least two resource groups, where the MCS configuration information is used to indicate an MCS candidate set; and

the notification unit is further configured to notify the UE of the MCS configuration information corresponding to the resource not in the at least two resource groups.

Optionally, each of the resource groups includes at least a CSI-RS and a CSI process; and in the at least two resource groups, resource groups that include different CSI processes of a same CSI-RS are corresponding to same MCS configuration information.

An embodiment of the present invention provides a first data receiving device, where the device includes:

a receiving unit, configured to: receive at least two resource groups notified by a base station, and receive modulation and coding scheme MCS configuration information that is notified by the base station and that is corresponding to data transmission, where the MCS configuration information is used to indicate an MCS candidate set, and the MCS configuration information includes modulation and coding scheme MCS configuration information corresponding to each of the resource groups; and

a determining unit, configured to determine a corresponding MCS candidate set according to MCS configuration information that is corresponding to the at least two resource groups, where

the receiving unit is further configured to perform data receiving according to the determined MCS candidate set.

Optionally, the receiving unit is further configured to receive MCS configuration information that is notified by the base station and that is corresponding to a resource not in the at least two resource groups, where the MCS configuration information is used to indicate an MCS candidate set; and

the determining unit is further configured to: determine the MCS candidate set according to the MCS configuration information that is notified by the base station and that is corresponding to the resource not in the at least two resource groups, and perform data receiving according to the determined MCS candidate set;

or

the determining unit is further configured to: determine the MCS candidate set according to predefined MCS configuration information that is corresponding to a resource not in the at least two resource groups, and perform data receiving according to the determined MCS candidate set;

or

the determining unit is further configured to perform data receiving according to a predefined MCS candidate set that is corresponding to a resource not in the at least two resource groups.

Preferably, that the receiving unit performs the data receiving according to the determined MCS candidate set includes:

receiving, according to an MCS candidate set corresponding to a resource group to which a data transmission resource belongs, data transmitted on the resource group;
or
selecting, according to a preset rule, an MCS candidate set corresponding to a resource group, to receive data;
or
selecting, according to a preset rule, an MCS candidate set corresponding to a resource group to which a data transmission resource belongs, to receive data;
or
receiving data according to an MCS candidate set corresponding to a resource group that includes most data transmission resources.

Optionally, each of the resource groups includes at least a CSI-RS and a CSI process; and in the at least two resource groups, resource groups that include different CSI processes of a same CSI-RS are corresponding to same MCS configuration information. Referring to FIG. 12, an embodiment of the present invention provides a fourth information notification device, where the device includes:

a processor 1101, configured to determine at least two resource groups and channel state information CSI configuration information corresponding to each of the resource groups, where the at least two resource groups and the CSI configuration information need to be notified to a user equipment UE, and the CSI configuration information is used to indicate a CSI candidate set; and
a transmitter 1102, configured to notify the UE of the at least two resource groups and the CSI configuration information corresponding to each of the resource groups.

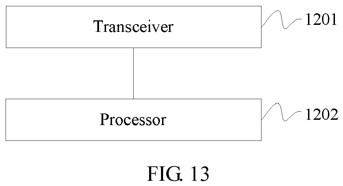

Optionally, the processor is further configured to determine CSI configuration information corresponding to a resource not in the at least two resource groups, where the CSI configuration information is used to indicate a CSI candidate set; and

the transmitter is further configured to notify the UE of the at least two resource groups and the CSI configuration information corresponding to each of the resource groups. Optionally, each of the resource groups includes at least a CSI-RS and a CSI process; and in the at least two resource groups, resource groups that include different CSI processes of a same CSI-RS are corresponding to same CSI configuration information. Referring to FIG. 13, an embodiment of the present invention provides a third information reporting device, where the device includes: a transceiver 1201 and a processor 1202.

The transceiver 1201 receives at least two resource groups and CSI configuration information corresponding to each of the resource groups, where the at least two resource groups and the CSI configuration information are notified by a base station, and the CSI configuration information is used to indicate a CSI candidate set.
The processor 1202 determines the CSI candidate set according to the CSI configuration information that is notified by the base station and that is corresponding to each of the resource groups, and performs CSI measurement on the resource group by using the CSI candidate set. The transceiver 1201 reports CSI obtained by the processor 1202 by measurement to the base station.
Optionally, the transceiver further receives channel state information CSI configuration information that is notified by the base station and that is corresponding to a resource not in the at least two resource groups, where the CSI configuration information is used to indicate a CSI candidate set; and

the processor further determines the CSI candidate set according to the CSI configuration information that is notified by the base station and that is corresponding to the resource not in the at least two resource groups, performs CSI measurement on the resource not in the at least two resource groups by using the CSI candidate set, and controls the transceiver to report CSI obtained by measurement to the base station;
or
the processor further determines the CSI candidate set according to predefined CSI configuration information that is corresponding to a resource not in the at least two resource groups, performs CSI measurement on the resource not in the at least two resource groups by using the CSI candidate set, and controls the transceiver to report CSI obtained by measurement to the base station;
or

34

the processor further performs CSI measurement on a resource not in the at least two resource groups according to a predefined CSI candidate set that is corresponding to the resource not in the at least two resource groups, and controls the transceiver to report CSI obtained by measurement to the base station.

Optionally, each of the resource groups includes at least a CSI-RS and a CSI process; and in the at least two resource groups, resource groups that include different CSI processes of a same CSI-RS are corresponding to same CSI configuration information.

An embodiment of the present invention provides a fifth information notification device, where the device includes:

a processor, configured to determine CSI configuration information that needs to be notified to a user equipment UE and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set; and a transmitter, configured to notify the UE of the CSI configuration information respectively corresponding to the case in which the CSI is reported based on the PUSCH reporting mode and the case in which the CSI is reported based on the PUCCH reporting mode. Preferably, the processor is further configured to: determine at least two resource groups that need to be notified to the user equipment UE, and notify the UE of the at least two resource groups; that the processor determines the CSI configuration information that needs to be notified to the UE and that is respectively corresponding to the case in which the CSI is reported based on the PUSCH reporting mode and the case in which the CSI is reported based on the PUCCH reporting mode includes: determining CSI configuration information that needs to be notified to the UE and that is corresponding to a case in which CSI of the at least two resource groups is reported based on the PUSCH reporting mode and CSI configuration information that needs to be notified to the UE and that is corresponding to a case in which CSI of the at least two resource groups is reported based on the PUCCH reporting mode; and that the transmitter notifies the UE of the CSI configuration information respectively corresponding to the case in which the CSI is reported based on the PUSCH reporting mode and the case in which the CSI is reported based on the PUCCH reporting mode includes: notifying the UE of the CSI configuration information corresponding to the case in which the CSI of the at least two resource groups is reported based on the PUSCH reporting mode and the CSI configuration information corresponding to the case in which the CSI of the at least two resource groups is reported based on the PUCCH reporting mode.

An embodiment of the present invention provides a fourth information reporting device, where the device includes: a processor and a transceiver.

The processor acquires CSI configuration information that is notified by a base station side or predefined and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set; the processor separately determines a corresponding CSI candidate set according to the CSI configuration information, and separately obtains, by using the corresponding CSI candidate set, CSI that needs to be reported based on the PUSCH reporting mode and/or CSI that needs to be reported based on the PUCCH reporting mode; and the corresponding CSI is reported to a base station by using the transceiver.

The transceiver is further configured to acquire at least two resource groups notified by the base station side;

that the processor acquires the CSI configuration information that is notified by the base station side or predefined and that is respectively corresponding to the case in which the CSI is reported based on the PUSCH reporting mode and the case in which the CSI is reported based on the PUCCH reporting mode includes: acquiring CSI configuration information that is notified by the base station side or predefined and that is corresponding to a case in which CSI of the at least two resource groups is reported based on the PUSCH reporting mode and CSI configuration information that is notified by the base station side or predefined and that is corresponding to a case in which CSI of the at least two resource groups is reported based on the PUCCH reporting mode; and that the transceiver separately determines the corresponding CSI candidate set according to the CSI configuration information, and separately obtains, by using the corresponding CSI candidate set, the CSI that needs to be reported based on the PUSCH reporting mode and/or the CSI that needs to be reported based on the PUCCH reporting mode includes: separately determining the corresponding CSI candidate set according to the CSI configuration information that is corresponding to the case in which the CSI of the at least two resource groups is reported based on the PUSCH reporting mode, and separately obtaining, by using the corresponding CSI candidate set, CSI of the at least two resource groups that needs to be reported based on the PUSCH reporting mode; and/or separately determining the corresponding CSI candidate set according to the CSI configuration information that is corresponding to the case in which the CSI of the at least two resource groups is reported based on a PUCCH, and separately obtaining, by using the corresponding CSI candidate set, CSI of the at least two resource groups that needs to be reported based on the PUCCH reporting mode.

An embodiment of the present invention provides a sixth information notification device, where the device includes:

a processor, configured to: determine at least two resource groups that need to be notified to a user equipment UE, and determine modulation and coding scheme MCS configuration information that needs to be notified to the user equipment UE and that is corresponding to data transmission, where the MCS configuration information is used to indicate an MCS candidate set, and the MCS configuration information includes MCS configuration information corresponding to each of the resource groups; and

a transmitter, configured to: notify the UE of the at least two resource groups and notify the UE of the MCS configuration information corresponding to the data transmission. Optionally, the processor is further configured to determine MCS configuration information corresponding to a resource not in the at least two resource groups, where the MCS configuration information is used to indicate an MCS candidate set; and

the transmitter is further configured to notify the UE of the MCS configuration information corresponding to the resource not in the at least two resource groups.

Optionally, each of the resource groups includes at least a CSI-RS and a CSI process; and
in the at least two resource groups, resource groups that include different CSI processes of a same CSI-RS are corresponding to same MCS configuration information.

An embodiment of the present invention provides a second data receiving device, where the device includes:

a receiver, configured to: receive at least two resource groups notified by a base station, and receive modulation and coding scheme MCS configuration information that is notified by the base station and that is corresponding to data transmission, where the MCS configuration information is used to indicate an MCS candidate set, and the MCS configuration information includes modulation and coding scheme MCS configuration information corresponding to each of the resource groups; and

a processor, configured to determine a corresponding MCS candidate set according to MCS configuration information that is corresponding to the at least two resource groups, where

the receiver is further configured to perform data receiving according to the determined MCS candidate set.

Optionally, the receiver is further configured to receive MCS configuration information that is notified by the base station and that is corresponding to a resource not in the at least two resource groups, where the MCS configuration information is used to indicate an MCS candidate set; and

the processor is further configured to: determine the MCS candidate set according to the MCS configuration information that is notified by the base station and that is corresponding to the resource not in the at least two resource groups, and perform data receiving according to the determined MCS candidate set;
or
the processor is further configured to: determine the MCS candidate set according to predefined MCS configuration information that is corresponding to a resource not in the at least two resource groups, and perform data receiving according to the determined MCS candidate set;
or
the processor is further configured to perform data receiving according to a predefined MCS candidate set that is corresponding to a resource not in the at least two resource groups.

Preferably, that the receiver performs the data receiving according to the determined MCS candidate set includes:

receiving, according to an MCS candidate set corresponding to a resource group to which a data transmission resource belongs, data transmitted on the resource group;
or
selecting, according to a preset rule, an MCS candidate set corresponding to a resource group, to receive data;
or
selecting, according to a preset rule, an MCS candidate set corresponding to a resource group to which a data transmission resource belongs, to receive data;

or

receiving data according to an MCS candidate set corresponding to a resource group that includes most data transmission resources.

Optionally, each of the resource groups includes at least a CSI-RS and a CSI process; and in the at least two resource groups, resource groups that include different CSI processes of a same CSI-RS are corresponding to same MCS configuration information.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims.

**Claims**

1. An information notification method, comprising:

   determining (101) at least two resource groups and channel state information, CSI, configuration information corresponding to each of the resource groups, wherein each of the resource groups comprises a subframe set and a carrier, the CSI configuration information is used to indicate a CSI candidate set, the CSI candidate set is a preset CSI table of a plurality of preset CSI tables, and at least one of the at least two preset CSI tables comprises 256 quadrature amplitude modulation, QAM, and the at least two preset CSI tables have different ranges of signal-to-noise ratios; and

   notifying (102) a user equipment, UE, of the at least two resource groups and the CSI configuration information corresponding to each of the resource groups.

2. The method according to claim 1, wherein the CSI comprises one or more of the following: channel quality indicator information, CQI, a precoding matrix indication, PMI, and a rank indication, RI.

3. The method according to any one of claims 1 to 2, wherein the CSI configuration information is bitmap signaling, and the set consisting of the candidate entry in the preset CSI table is represented by using the bitmap signaling.

4. The method according to any one of claims 1 to 3, wherein the CSI table is a CQI table, a PMI table, or an RI table.

5. An information reporting method, comprising:

receiving (201) at least two resource groups and channel state information, CSI, configuration information corresponding to each of the resource groups, wherein each of the resource groups comprises a subframe set and a carrier, the at least two resource groups and the CSI configuration information are notified by a base station, and the CSI configuration information is used to indicate a CSI candidate set, wherein the CSI candidate set is a preset CSI table of a plurality of preset CSI tables, and at least one of the at least two preset CSI tables comprises 256 quadrature amplitude modulation, QAM, and the at least two preset CSI tables have different ranges of signal-to-noise ratios; and

determining (202) the CSI candidate set according to the first CSI configuration information that is corresponding to each of the resource groups; and

performing (202) CSI measurement on the resource group by using the first CSI candidate set; and

reporting (202) CSI obtained by measurement to the base station.

6. The method according to claim 5, wherein the CSI comprises one or more of the following: channel quality indicator information, CQI, a precoding matrix indication, PMI, and a rank indication, RI.

7. The method according to claim 5 or 6, wherein the CSI configuration information is bitmap signaling, and the set consisting of a candidate entry in the preset CSI table is represented by using the bitmap signaling.

8. The method according to any one of claims 5 to 7, wherein the CSI table is a CQI table, a PMI table, or an RI table.

9. An information notification apparatus configured to perform the method according to any one of claims 1 to 4.

10. An information reporting apparatus configured to perform the method according to any one of claims 5 to 8.

11. A computer program product, comprising computer program code, which, when executed by a computer unit, will cause the computer unit to perform the method according to any one of claims 1 to 8.

**Patentansprüche**

1. Informationsmeldeverfahren, das Folgendes aufweist:

Ermitteln (101) von mindestens zwei Ressourcengruppen und einer Kanalzustandsinformation-, CSI-, Konfigurationsinformation entsprechend jeder der Ressourcengruppen, wobei jede der Ressourcengruppen einen Unterrahmensatz und einen Träger aufweist und die CSI-Konfigurationsinformation zum Angeben eines CSI-Kandidatensatzes verwendet wird, wobei der CSI-Kandidatensatz eine vorgegebene CSI-Tabelle einer Vielzahl von vorgegebenen CSI-Tabellen ist und mindestens eine der mindestens zwei vorgegebenen CSI-Tabellen 256 Quadraturamplitudenmodulationen, QAM, aufweist und die mindestens zwei vorgegebenen CSI-Tabellen unterschiedliche Bereiche von Signal-Rausch-Verhältnissen haben; und

Melden (102) der mindestens zwei Ressourcengruppen und der CSI-Konfigurationsinformation entsprechend jeder der Ressourcengruppen an ein Endgerät, UE.

2. Verfahren nach Anspruch 1, wobei die CSI mindestens eines der folgenden Elemente aufweist: eine Kanalqualitätsindikatorinformation, CQI, eine Vorcodierungs-Matrixangabe, PMI, und eine Rangangabe, RI.

3. Verfahren nach einem der Ansprüche 1 bis 2, wobei die CSI-Konfigurationsinformation eine Bitmap-Signalisierung ist und der aus dem Kandidateneintrag in der vorgegebenen CSI-Tabelle bestehende Satz durch Verwenden der Bitmap-Signalisierung dargestellt wird.

4. Verfahren nach einem der Ansprüche 1 bis 3, wobei die CSI-Tabelle eine CQI-Tabelle, eine PMI-Tabelle oder eine RI-Tabelle ist.

**5.** Informationsberichtsverfahren, das Folgendes aufweist:

Empfangen (201) von mindestens zwei Ressourcengruppen und einer Kanalzustandsinformation-, CSI-, Konfigurationsinformation entsprechend jeder der Ressourcengruppen, wobei jede der Ressourcengruppen einen Unterrahmensatz und einen Träger aufweist und die mindestens zwei Ressourcengruppen und die CSI-Konfigurationsinformation von einer Basisstation gemeldet werden und die CSI-Konfigurationsinformation zum Angeben eines CSI-Kandidatensatzes verwendet wird, wobei der CSI-Kandidatensatz eine vorgegebene CSI-Tabelle einer Vielzahl von vorgegebenen CSI-Tabellen ist und mindestens eine der mindestens zwei vorgegebenen CSI-Tabellen 256 Quadraturamplitudenmodulationen, QAM, aufweist und die mindestens zwei vorgegebenen CSI-Tabellen unterschiedliche Bereiche von Signal-Rausch-Verhältnissen haben; und
Ermitteln (202) des ersten CSI-Kandidatensatzes gemäß der ersten CSI-Konfigurationsinformation, die jeder der Ressourcengruppen entspricht; und
Durchführen (202) einer CSI-Messung an der Ressourcengruppe durch Verwenden des ersten CSI-Kandidatensatzes; und
Berichten (202) der durch Messung ermittelten CSI an die Basisstation.

**6.** Verfahren nach Anspruch 5, wobei die CSI mindestens eines der folgenden Elemente aufweist: eine Kanalqualitätsindikatorinformation, CQI, eine Vorcodierungs-Matrixangabe, PMI, und eine Rangangabe, RI.

**7.** Verfahren nach Anspruch 5 oder 6, wobei die CSI-Konfigurationsinformation eine Bitmap-Signalisierung ist und der aus einem Kandidateneintrag in der vorgegebenen CSI-Tabelle bestehende Satz durch Verwenden der Bitmap-Signalisierung dargestellt wird.

**8.** Verfahren nach einem der Ansprüche 5 bis 7, wobei die CSI-Tabelle eine CQI-Tabelle, eine PMI-Tabelle oder eine RI-Tabelle ist.

**9.** Informationsmeldevorrichtung, ausgebildet zum Durchführen des Verfahrens nach einem der Ansprüche 1 bis 4.

**10.** Informationsberichtsvorrichtung, ausgebildet zum Durchführen des Verfahrens nach einem der Ansprüche 5 bis 8.

**11.** Computerprogrammprodukt, das Computerprogrammcode aufweist, der beim Ausführen durch einen Computer den Computer dazu veranlasst, das Verfahren nach einem der Ansprüche 1 bis 8 durchzuführen.

**Revendications**

**1.** Procédé de signalement d'informations, comprenant :

déterminer (101) au moins deux groupes de ressources et des informations de configuration d'informations d'état de canal, CSI, correspondant à chacun des groupes de ressources, dans lequel chacun des groupes de ressources comprend un ensemble de sous-trames et une porteuse, les informations de configuration de CSI sont utilisées pour indiquer un ensemble candidat de CSI, l'ensemble candidat de CSI est une table de CSI prédéfinie d'une pluralité de tables de CSI prédéfinies, et au moins l'une des au moins deux tables de CSI prédéfinies comprend une modulation d'amplitude en quadrature, QAM, à 256 états, et les au moins deux tables de CSI prédéfinies ont différentes plages de rapports signal sur bruit ; et
signaler (102) à un équipement d'utilisateur, UE, les au moins deux groupes de ressources et les informations de configuration de CSI correspondant à chacun des groupes de ressources.

**2.** Procédé selon la revendication 1, dans lequel les CSI comprennent l'un ou plusieurs parmi : des informations d'indicateur de qualité de canal, CQI, une indication de matrice de précodage, PMI, et une indication de rang, RI.

**3.** Procédé selon l'une quelconque des revendications 1 ET 2, dans lequel les informations de configuration de CSI sont une signalisation en mode point, et l'ensemble constitué de l'entrée candidate dans la table de CSI prédéfinie est représenté au moyen de la signalisation en mode point.

**4.** Procédé selon l'une quelconque des revendications 1 à 3, dans lequel la table de CSI est une table de CQI, une table de PMI, ou une table de RI.

**5.** Procédé de signalement d'informations, comprenant :

recevoir (201) au moins deux groupes de ressources et des informations de configuration d'informations d'état de canal, CSI, correspondant à chacun des groupes de ressources, dans lequel chacun des groupes de ressources comprend un ensemble de sous-trames et une porteuse, les au moins deux groupes de ressources et les informations de configuration de CSI sont signalés par une station de base, et les informations de configuration de CSI sont utilisées pour indiquer un ensemble candidat de CSI, dans lequel l'ensemble candidat de CSI est une table de CSI prédéfinie d'une pluralité de tables de CSI prédéfinies, et au moins l'une des au moins deux tables de CSI prédéfinies comprend une modulation d'amplitude en quadrature, QAM, à 256 états et les au moins deux tables de CSI prédéfinies ont différentes plages de rapports signal sur bruit ; et
déterminer (202) l'ensemble candidat de CSI en fonction des premières informations de configuration de CSI qui correspondent à chacun des groupes de ressources ; et
effectuer (202) une mesure de CSI sur le groupe de ressources en utilisant le premier ensemble candidat de CSI ; et
signaler (202) les CSI obtenues par la mesure à la station de base.

**6.** Procédé selon la revendication 5, dans lequel les CSI comprennent l'un ou plusieurs parmi : des informations d'indicateur de qualité de canal, CQI, une indication de matrice de précodage, PMI, et une indication de rang, RI.

**7.** Procédé selon la revendication 5 ou 6, dans lequel les informations de configuration de CSI sont une signalisation en mode point, et l'ensemble constitué d'une entrée candidate dans la table de CSI prédéfinie est représenté au moyen de la signalisation en mode point.

**8.** Procédé selon l'une quelconque des revendications 5 à 7, dans lequel la table de CSI est une table de CQI, une table de PMI, ou une table de RI.

**9.** Appareil de signalement d'informations configuré pour exécuter le procédé selon l'une quelconque des revendications 1 à 4.

**10.** Appareil de signalement d'informations configuré pour exécuter le procédé selon l'une quelconque des revendications 5 à 8.

**11.** Produit de programme informatique, comprenant un code de programme informatique qui, lorsqu'il est exécuté par une unité informatique, amène l'unité informatique à exécuter le procédé selon l'une quelconque des revendications 1 à 8.

Determine at least two resource groups and channel quality indicator CSI configuration information corresponding to each of the resource groups, where the at least two resource groups and the CSI configuration information need to be notified to a user equipment UE, and the CSI configuration information is used to indicate a CSI candidate set

101

Notify the UE of the at least two resource groups and the CSI configuration information corresponding to each of the resource groups

102

FIG. 1

Receive at least two resource groups and CSI configuration information corresponding to each of the resource groups, where the at least two resource groups and the CSI configuration information are notified by a base station, and the CSI configuration information is used to indicate a CSI candidate set

201

Determine the CSI candidate set according to the CSI configuration information that is notified by the base station and that is corresponding to each of the resource groups, and perform CSI measurement on the resource group by using the CSI candidate set, and report CSI obtained by measurement to the base station

202

FIG. 2

Determine CSI configuration information that needs to be notified to a user equipment UE and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set

301

Notify the UE of the CSI configuration information respectively corresponding to the case in which the CSI is reported based on the PUSCH reporting mode and the case in which the CSI is reported based on the PUCCH reporting mode

302

FIG. 3

Acquire CSI configuration information that is notified by a base station side or predefined and that is respectively corresponding to a case in which CSI is reported based on a physical uplink shared channel PUSCH reporting mode and a case in which CSI is reported based on a physical uplink control channel PUCCH reporting mode, where the CSI configuration information is used to indicate a CSI candidate set

401

Separately determine a corresponding CSI candidate set according to the CSI configuration information, separately obtain, by using the corresponding CSI candidate set, CSI that needs to be reported based on the PUSCH reporting mode and/or CSI that needs to be reported based on the PUCCH reporting mode, and report the corresponding CSI to a base station

402

FIG. 4

Determine at least two resource groups that need to be notified to a user equipment UE, and determine CSI configuration information that needs to be notified to the UE and that is corresponding to a case in which a channel quality indicator CSI of the at least two resource groups is reported based on a PUSCH reporting mode and CSI configuration information that needs to be notified to the UE and that is corresponding to a case in which CSI of the at least two resource groups is reported based on a PUCCH reporting mode

501

Notify the UE of the at least two resource groups, and notify the UE of the CSI configuration information corresponding to the case in which the CSI of the at least two resource groups is reported based on the PUSCH reporting mode and the CSI configuration information corresponding to the case in which the CSI of the at least two resource groups is reported based on the PUCCH reporting mode

502

FIG. 5

Acquire at least two resource groups notified by a base station side, and acquire CSI configuration information that is notified by the base station side or predefined and that is corresponding to a case in which CSI of the at least two resource groups is reported based on a PUSCH reporting mode and CSI configuration information that is notified by the base station side or predefined and that is corresponding to a case in which CSI of the at least two resource groups is reported based on a PUCCH reporting mode

601

Separately determine a corresponding CSI candidate set according to the CSI configuration information that is corresponding to the case in which the CSI of the at least two resource groups is reported based on a PUSCH reporting mode, and separately obtain, by using the corresponding CSI candidate set, CSI of the at least two resource groups that needs to be reported based on the PUSC-based reporting mode; and/or separately determine a corresponding CSI candidate set according to the CSI configuration information that si corresponding to the case in which the CSI of the at least two resource groups is reported based on a PUCCH reporting mode, and separately obtain, by using the corresponding CSI candidate set, CSI of the at least two resource groups that needs to be reported based on the PUCCH reporting mode

602

FIG. 6

Determine at least two resource groups that need to be notified to a user equipment UE, and determine modulation and coding scheme MCS configuration information that needs to be notified to the user equipment UE and that is corresponding to data transmission, where the MCS configuration information is used to indicate an MCS candidate set, and the MCS configuration information includes MCS configuration information corresponding to each of the resource groups

701

Notify the UE of the at least two resource groups, and notify the UE of the MCS configuration information corresponding to the data transmission

702

FIG. 7

Receive at least two resource groups notified by a base station, and receive modulation and coding scheme MCS configuration information that is notified by the base station and that is corresponding to data transmission, where the MCS configuration information is used to indicate an MCS candidate set, and the MCS configuration information includes modulation and coding scheme MCS configuration information corresponding to each of the resource groups

801

Determine a corresponding MCS candidate set according to MCS configuration information that is corresponding to different resource groups, and perform data receiving according to the determined MCS candidate set

802

FIG. 8

| Determining unit | 71 |
| Notification unit | 72 |

FIG. 9

| Receiving unit | 81 |
| Determining unit | 82 |

FIG. 10

| Acquiring unit | 91 |
| Reporting unit | 92 |

FIG. 11

| Processor | 1101 |
| Transmitter | 1102 |

FIG. 12

| Transceiver | ～ 1201 |
|:---:|:---:|
| Processor | ～ 1202 |

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070259671 A1

- EP 2228933 A1